# FASCICULE DE BREVET EUROPEEN

(11) **EP 2 408 292 B1**
(45) Date de publication et mention de la délivrance du brevet: **19.06.2013**
(21) Numéro de dépôt: 10715942.8
(22) Date de dépôt: 15.03.2010
(51) Int. Cl.: A01G 9/08

(54) **AUTOMATE DE PHÉNOTYPAGE DE PLANTE**
VORRICHTUNG ZUR PHÄNOTYPBESTIMMUNG VON PFLANZEN
DEVICE FOR PHENOTYPING OF PLANTS

(30) Priorité: 16.03.2009 FR 0951653
(43) Date de publication de la demande: 25.01.2012
(73) Titulaire: INSTITUT NATIONAL DE LA RECHERCHE AGRONOMIQUE (INRA), 75007 Paris (FR)
(72) Inventeur: GUERCHE, Philippe, 78210 Saint-Cyr-l'École (FR); CAMILLERI, Christine, 75013 Paris (FR); BOUCHEZ, David, 94230 Cachan (FR); BALASSE, Hervé, 78470 Saint-Rémy-lès-Chevreuse (FR)
(74) Mandataire: Orsini, Fabienne
(86) Numéro de dépôt international: PCT/FR2010/050460
(87) Numéro de publication internationale: WO 2010/106278

(56) Documents cités:
- DE-A1- 2 820 339
- US-A- 3 909 978
- US-A- 5 253 302
- US-A1- 2004 244 283

## Description

### DOMAINE DE L'INVENTION

L'invention se rapporte au domaine des automates utilisables pour la culture ou le phénotypage d'une pluralité de plantes dans un environnement contrôlé.

### ETAT DE LA TECHNIQUE ANTERIEURE

Le phénotype d'une plante résulte de l'expression de ses gènes dans un environnement donné.

Ainsi, même dans des conditions de culture identiques, des plantes de génotypes différents auront des phénotypes différents. Quant à des plantes génétiquement identiques, si elles subissent exactement les mêmes conditions climatiques au cours de leur croissance, elles devraient avoir des phénotypes identiques. Si, par contre, elles sont cultivées dans des environnements différents, elles auront des phénotypes différents.

Lorsque l'on étudie un caractère sur une population de plantes, il est important que toutes les plantes étudiées bénéficient de conditions de culture les plus homogènes possibles, afin que les composantes génétiques du phénotype puissent être clairement identifiées et que la part de variation due à l'environnement dans la mesure du caractère soit minimisée.

Un tel besoin existe notamment lorsque l'on réalise des essais de culture visant à observer la réponse adaptative de plantes à des conditions de culture spécifiques, dans le but de déterminer les facteurs génétiques qui entrent en jeu dans cette réponse. En effet, l'une des situations pour lesquelles on procède à des essais de phénotypage sur de grands effectifs de plantes pouvant comprendre jusqu'à plusieurs centaines de plantes consiste en l'identification des bases génétiques et physiologiques de la réponse adaptative d'une espèce végétale aux contraintes de son environnement.

La connaissance des gènes et des protéines impliqués dans les réponses adaptatives des plantes à des conditions d'environnement déterminées permet d'explorer les fonctions biochimiques de ces gènes ou protéines, leur régulation, et leur organisation en réseaux d'interaction ou de régulation, qui peuvent permettre de générer des modèles écophysiologiques ou évolutifs.

Lors de telles études, on cherche à déterminer les différences génétiques qui expliquent les différences phénotypiques respectives entre les plantes. Si l'on ne fixe pas les conditions climatiques pour qu'elles soient identiques pendant la culture des plantes, on ne peut pas savoir quelle part, dans leurs phénotypes respectifs, est due à la composante génétique et quelle part est due aux différences entre les conditions climatiques que subissent ces plantes.

Par conséquent, dans de tels essais, il est essentiel d'être en mesure de contrôler le plus précisément possible l'homogénéité des conditions d'environnement auxquelles sont soumises les plantes à tester, afin de réduire au maximum la part de variation des caractères étudiés due à des fluctuations incontrôlées des conditions de culture, telles que les valeurs d'éclairement, de température ou d'hygrométrie. Si de telles conditions sont réalisées, alors les différences phénotypiques observées entre les différentes plantes ne reflèteront plus que leurs différences génétiques, et il sera par conséquent possible d'accéder aux gènes impliqués dans le caractère observé.

Le plus souvent, lorsque l'on désire réaliser un essai de culture de plantes dans des conditions d'environnement contrôlées, on place l'ensemble des plantes à cultiver dans une enceinte de culture confinée, par exemple dans une serre, ou mieux dans une chambre de culture, disposant de moyens de contrôle de paramètres tels que l'éclairement, la température et l'hygrométrie, ces paramètres étant ajustés à des valeurs de consigne choisies et maintenus les plus homogènes possibles dans l'ensemble du volume de l'enceinte occupé par les plantes.

S'il existe actuellement des technologies efficaces pour phénotyper certains caractères à haut débit, les possibilités de cultiver des plantes dans un environnement homogène sont en revanche encore limitées, notamment en raison des micro-variations climatiques qui existent au sein d'une enceinte de culture, y compris d'une enceinte de culture équipée de moyens sophistiqués de contrôle des conditions de l'environnement tels que température, hygrométrie, niveau d'éclairement, etc. En effet, les variations locales, à l'échelle centimétrique, des conditions d'environnement sont extrêmement difficiles à contrôler précisément, même dans une enceinte confinée. Ainsi, actuellement, il est seulement possible d'ajuster un climat global moyen de l'ensemble du volume de l'enceinte. Les effets des micro-variations des conditions d'environnement engendrent des disparités phénotypiques importantes, en particulier pour les espèces végétales de petite taille comme l'espèce modèle Arabidopsis thaliana. Par exemple, en raison desdites micro-variations climatiques, aussi faibles soient-elles, des plantes génétiquement identiques pourront présenter des phénotypes différents, menant alors à la conclusion erronée selon laquelle ces plantes sont génétiquement différentes.

On peut constater que, dans le domaine en plein développement du phénotypage des plantes, certains systèmes d'analyse actuellement utilisés sont satisfaisants du point de vue de la précision apportée, tels que les moyens de pesée et d'analyse des caractéristiques phénotypiques d'intérêt, par exemple à l'aide d'appareils de prise de vues et d'analyse numérique d'images.

On connaît par exemple des dispositifs pour le phénotypage de plantes, de capacités variables, équipés d'un système de circulation de plantes permettant de transporter celles-ci vers un poste de phénotypage automatique équipé généralement d'un dispositif d'éclairage et d'au moins un appareil de prise de vues. Ces systèmes de phénotypage des plantes permettent l'automatisation de la mesure de paramètres importants pour l'étude de la croissance et de la morphologie des plantes, comme l'estimation de la biomasse et de la couleur des plantes, l'identification de zones endommagées, et l'analyse de l'architecture des plantes. On connaît par exemple du document EP 1 154 370 un procédé d'évaluation automatique de plantes vertes à partir d'une image numérique.

Dans certains de ces dispositifs de phénotypage, les plantes sont placées sur un convoyeur à rouleaux motorisé délimitant un trajet en circuit fermé, le dispositif de convoyage étant prévu pour permettre le passage d'une plante donnée par le poste de phénotypage, une fois par 24 heures. De tels dispositifs de phénotypage, très encombrants, sont nécessairement installés dans une serre où, d'une part, le climat global est difficilement contrôlé et où, d'autre part, le climat ne peut pas être reproduit à l'identique au cours du temps. Dans d'autres dispositifs de phénotypage, les plantes ne sont déplacées que durant l'opération de pesage, et elles restent donc immobiles, à une localisation donnée de l'enceinte de culture, durant la plus grande partie de la période d'étude. Par conséquent, dans les dispositifs actuels, les conditions climatiques que subissent les plantes ne sont pas suffisamment homogènes pour permettre des études phénotypiques poussées.

Il existe un besoin dans l'état de la technique pour des procédés et des dispositifs pour la culture ou le phénotypage de plantes, alternatifs ou améliorés par rapport aux procédés et aux dispositifs actuels. En particulier, il existe un besoin pour des procédés et des dispositifs pour la culture ou le phénotypage de plantes, pour lesquels on appliquerait aux plantes des conditions d'environnement sensiblement identiques pendant la totalité de la durée de l'essai de culture ou de phénotypage.

### RESUME DE L'INVENTION

La présente invention fournit un tel dispositif pour la culture ou le phénotypage de plantes, dont les caractéristiques spécifiques permettent de réduire drastiquement les écarts de conditions d'environnement appliquées aux plantes pendant la durée de la culture ou de l'essai de phénotypage.

Selon l'invention, l'application à une plante donnée de conditions d'environnement sensiblement identiques à celles appliquées à chacune des autres plantes simultanément cultivées ou testées a été atteinte grâce à un dispositif automate et à un procédé permettant à chacune desdites plantes de prendre, plusieurs fois par jour, successivement chaque position possible sur la surface de culture ou d'essai. Ainsi, avec le dispositif automate et le procédé de l'invention, on applique statistiquement les mêmes conditions d'environnement à chacune des plantes cultivées ou testées, pendant la totalité de la durée de la culture ou de l'essai de phénotypage.

Comme cela sera spécifié dans la description détaillée de l'invention, le dispositif automate de l'invention permet la culture simultanée d'un grand nombre de plantes tout en occupant une surface réduite. Ledit dispositif automate peut donc être installé dans une enceinte de culture de taille conventionnelle. C'est le type de disposition des plantes sur la surface utile de l'automate, combinée à la géométrie du circuit de déplacement en boucle des plantes sur la quasi-totalité de ladite surface utile, qui rend possible l'application de conditions d'environnement extrêmement homogènes.

La présente invention concerne un automate de caractéristiques spécifiques, utilisable pour la culture ou le phénotypage d'une pluralité de plantes dans un environnement contrôlé, ledit automate comprenant un plateau sur lequel est disposée une pluralité de supports mobiles pour substrat de culture, lesdits supports mobiles étant aptes à prendre successivement toutes les positions possibles sur la surface dudit plateau.

L'invention est aussi relative à une installation utilisable pour la culture ou le phénotypage d'une pluralité de plantes dans un environnement contrôlé, comprenant notamment ledit automate.

L'invention a également trait à un procédé utilisable pour la culture ou le phénotypage d'une pluralité de plantes dans un environnement contrôlé, dans lequel est mis en oeuvre l'automate défini ci-dessus.

### BREVE DESCRIPTION DES DESSINS

La figure 1 est un schéma général en vue de dessus, d'un mode de réalisation particulier de l'automate.
La figure 2 est une succession de trois schémas en vue de dessus, illustrant la succession d'étapes d'un mode de réalisation du procédé de culture ou de phénotypage de plantes de l'invention. Le schéma de la figure 2A illustre un mode de réalisation de l'étape a) du procédé. Le schéma de la figure 2B illustre un mode de réalisation de l'étape b) du procédé. Le schéma de la figure 2C illustre un mode de réalisation de l'étape c) du procédé.
La figure 3 est un schéma synthétique de la succession d'étapes de commande et de contrôle effectuées dans un exemple de déroulement d'un cycle de culture ou de phénotypage d'une pluralité de plantes.
La figure 4 présente les courbes de pertes de poids cumulées pour chaque motte d'un ensemble de 735 mottes soumises respectivement:
   - à un cycle de déplacement de 4 heures par 24 heures (figure 4A), ou
   - à six cycles de déplacement de 4 heures par 24 heures (figure 4B).
En abscisses : numéro d'identification de chaque motte testée, avec 735 mottes utilisées dans l'essai ; en ordonnées : perte de poids de chaque motte testée en 24 heures, exprimée en grammes.

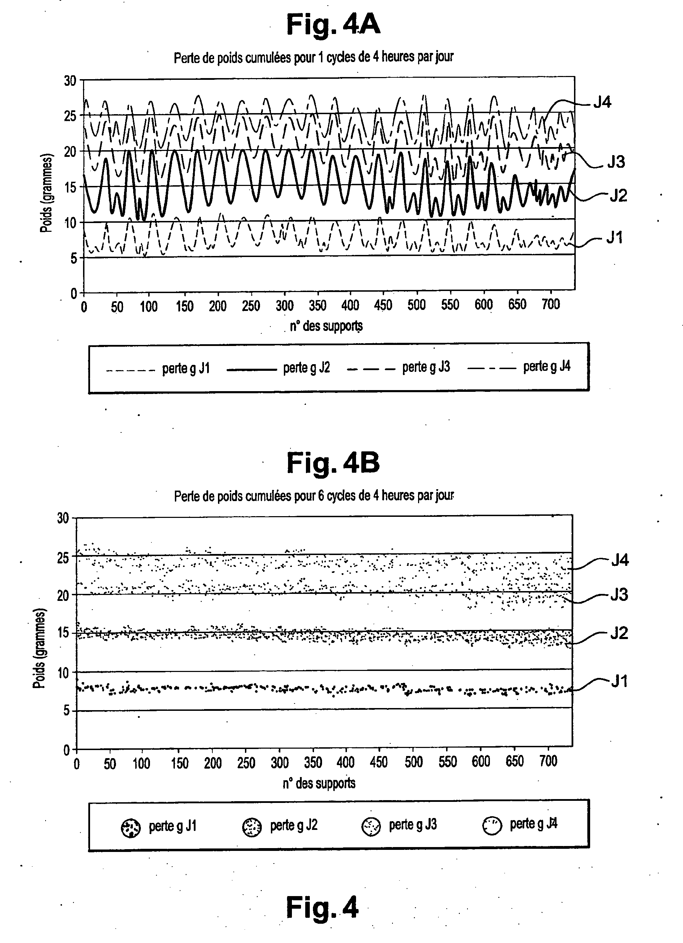

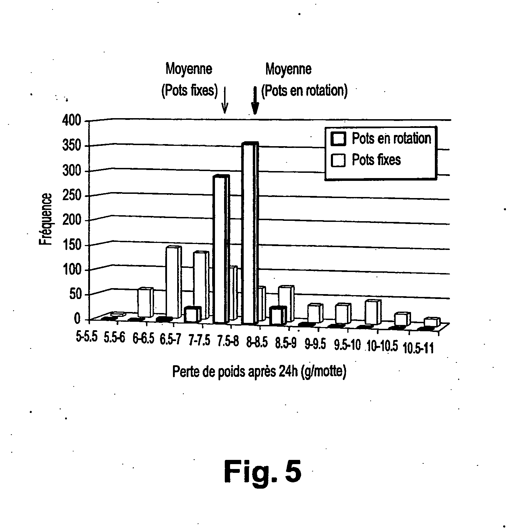

En complément de la figure 4, la figure 5 présente les courbes de pertes de poids après 24 heures pour un ensemble de 735 mottes soumises respectivement:
- à un cycle de déplacement de 4 heures par 24 heures (pots fixes), ou
- à six cycles de déplacement de 4 heures par 24 heures (pots en rotation).
En abscisses : fréquence (ou nombre de mottes), avec 735 mottes utilisées dans l'essai ; en ordonnées : perte de poids après 24 heures, exprimée en grammes par motte.

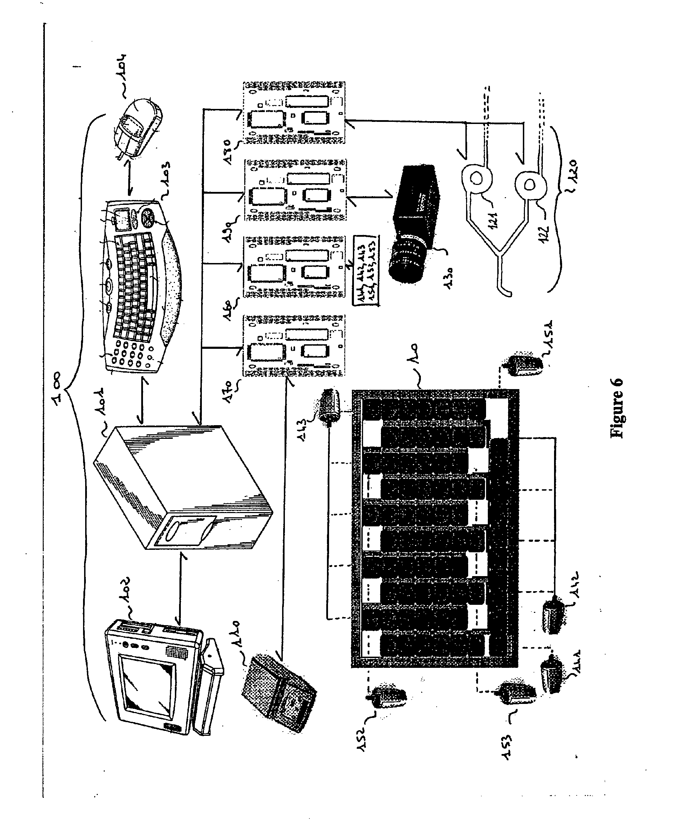

La figure 6 représente un schéma d'un mode de réalisation d'une installation de culture et de phénotypage selon l'invention.

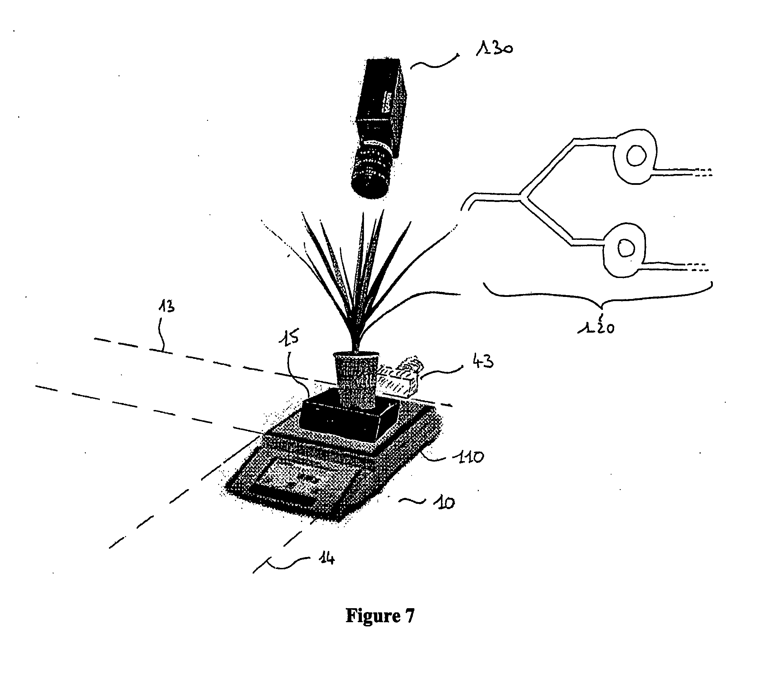

La figure 7 représente un schéma d'un mode de réalisation particulier de l'installation de la figure 6, où un moyen de pesée, un dispositif de prise de vues et un moyen d'apport en eau et/ou en solution nutritive sont disposés en un même emplacement sur le circuit de déplacement des plantes.

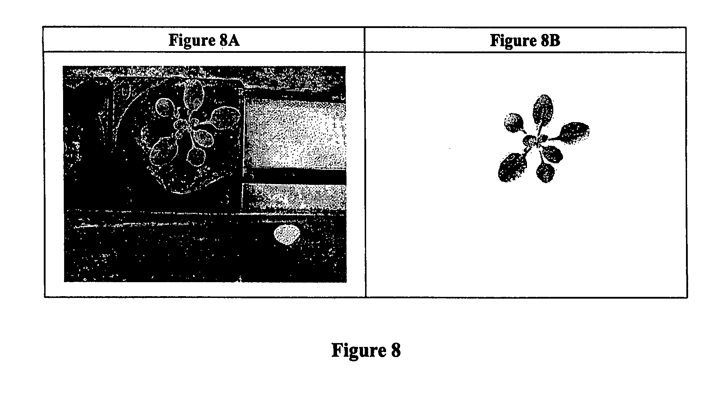

La figure 8 représente une photographie numérique d'une plante prise par un dispositif de prise de vues disposé sur le parcours des plantes (figure 8A) et l'image de sa surface foliaire qui en est extraite après analyse automatique d'image (figure 8B).

### DESCRIPTION DETAILLEE DE L'INVENTION

Les demandeurs ont observé que, avec les automates pour la culture ou le phénotypage de plantes connus, il existait une variabilité significative des conditions de culture auxquelles était soumise chacune des plantes cultivées ou testées. Les demandeurs ont ainsi déterminé que les caractéristiques des automates connus entraînaient que les plantes étaient immobilisées à une localisation donnée de l'enceinte de culture durant la majeure partie de la durée de l'essai. Ainsi, avec les automates connus, chacune des plantes cultivées ou testées était soumise à des conditions locales spécifiques d'environnement, distinctes des conditions d'environnement auxquelles était soumise chacune des autres plantes cultivées ou testées. Il en résultait une variation des conditions de culture de chaque plante de l'ensemble des plantes testées, susceptible d'introduire des différences significatives dans la vitesse de croissance de chaque plante ou dans d'autres caractéristiques des plantes. Ces différences de caractéristiques entre les plantes cultivées constituait un inconvénient important pour la réalisation d'essais de phénotypage de plantes, du fait de la difficulté résultante de déterminer, pour la mesure d'une variation d'un caractère phénotypique donné, quelle pouvait être la contribution des conditions d'environnement de consigne choisies et la contribution de la variabilité non contrôlée de ces conditions, à la variation du caractère d'intérêt qui était détectée ou mesurée. Par exemple, cet inconvénient rencontré avec les automates connus est illustré dans les exemples de la présente demande de brevet par la difficulté de contrôler précisément les conditions hydriques de culture des plantes, ce qui engendre une importante variabilité des conditions d'hygrométrie auxquelles sont soumises les plantes. On comprend aisément qu'une telle variabilité dans les conditions d'hygrométrie auxquelles sont soumises les plantes peut engendrer des artefacts significatifs sur les résultats de l'essai, par exemple lorsqu'on effectue une étude de la réponse adaptative des plantes à l'application de conditions de stress hydrique.

Afin de remédier aux inconvénients rencontrés avec les automates connus, les demandeurs ont mis au point un dispositif automate pour la culture de plantes et un procédé pour son utilisation, dont les caractéristiques spécifiques permettent à chaque plante cultivée et disposée sur le plateau dudit automate, de prendre plusieurs fois par jour successivement toutes les positions possibles sur la surface dudit plateau, de telle manière que chaque plante est soumise, plusieurs fois par jour, à chacune des micro-conditions d'environnement possibles en chaque point de la surface du plateau. Avec l'automate mis au point par les demandeurs, toutes les plantes cultivées sont soumises aux mêmes conditions moyennes d'environnement par 24 heures, et en conséquence également pendant la totalité de la durée de la culture de ces plantes.

Sont décrits en détail ci-dessous le dispositif et le procédé de culture ou de phénotypage de plantes qui ont été mis au point selon l'invention.

### Automate utilisable pour la culture ou le phénotypage d'une pluralité de plantes dans un environnement contrôlé

La présente invention a pour objet un automate utilisable pour la culture ou le phénotypage d'une pluralité de plantes dans un environnement contrôlé, comprenant un plateau (10) sur lequel est disposée une pluralité de supports mobiles (15) pour substrat de culture, lesdits supports mobiles (15) étant aptes à prendre successivement toutes les positions possibles sur la surface dudit plateau (10), ledit automate comprenant :
(a) un plateau (10) délimité respectivement par quatre côtés à bord surélevé, respectivement un côté inférieur à bord (11), un côté latéral gauche à bord (12), un côté supérieur à bord (13), et un côté latéral droit à bord (14), et dont la surface comprend :
   - une rangée (20) délimitée respectivement par le bord (11) surélevé du plateau et un guide (21) parallèle audit bord (11), les extrémités du guide (21) étant distantes des bords (12) et (14) du plateau (10) d'une distance suffisante pour permettre de chaque côté le passage d'un support mobile (15),
   - une pluralité de N colonnes adjacentes (30) C1 à CN perpendiculaires à la rangée (20) et délimitées par les deux bords surélevés (12, 14) des deux côtés opposés du plateau (10) perpendiculaires au premier côté (11) et par une pluralité de N-1 guides (31, 32), la pluralité de guides (31, 32) comprenant :
      - un premier groupe de (N/2) guides (31) dans lequel chaque guide (31) comprend deux extrémités (311, 312), l'une (311) étant en contact avec le guide (21), l'autre (312) étant distante du bord (13) du plateau (10) d'une distance suffisante pour permettre le passage d'un support mobile (15), et
      - un deuxième groupe de (N/2)-1 guides (32) dans lequel chaque guide (32), intercalé entre deux guides successifs du premier groupe (31), comprend deux extrémités (321, 322), l'une (321) étant en contact avec le bord (13) du côté du plateau (10) opposé à la rangée (20), l'autre (322) étant distante du guide (21) parallèle à la rangée (20) d'une distance suffisante pour permettre le passage d'un support mobile (15), et
   - N est un nombre pair,
(b) une pluralité de supports mobiles (15) disposés sur la surface du plateau (10),
(c) des moyens de translation des supports mobiles (15) selon un axe parallèle aux guides (31, 32), respectivement :
   - un premier moyen (41), localisé au repos à l'extrémité du bord (11) qui est en contact avec le bord (12) du plateau (10), pour la translation des supports mobiles (15) dans une direction allant du bord (11) vers le bord (13) du plateau (10), le long de la colonne C1 délimitée par le bord (12) et le guide (31) adjacent,
   - une première série de moyens (42), pour la translation des supports mobiles (15) dans une direction allant du guide (21) parallèle au bord (11) vers le bord (13) du plateau (10), le long de chacune des colonnes de rang impair C3 à CN-1, et
   - une deuxième série de moyens (43), pour la translation des supports mobiles (15) dans une direction allant du bord (13) vers le bord (11) du plateau (10), le long de chacune des colonnes de rang pair C2 à CN, et
(d) des moyens de translation des supports mobiles (15) selon un axe parallèle à la rangée (20), respectivement :
   - un premier moyen (51), localisé au repos à l'extrémité du bord (14) qui est en contact avec le bord (11) du plateau (10), pour la translation des supports mobiles (15) dans une direction allant du bord (14) vers le bord (12) du plateau (10), le long de la rangée (20) délimitée par le bord (11) et le guide (21) adjacent,
   - une première série de moyens (52) pour la translation des supports mobiles (15) localisés du côté du bord (13) à l'extrémité de chacune des colonnes de rang impair C1 à CN-1, vers l'extrémité de chacune des colonnes de rang pair adjacente C2 à CN, et
   - une seconde série de moyens (53) pour la translation des supports mobiles (15) localisés du côté du guide (21) parallèle au bord (11) à l'extrémité de chacune des colonnes de rang pair C2 à CN-2, vers l'extrémité de chacune des colonnes de rang impair adjacente C3 à CN-1.

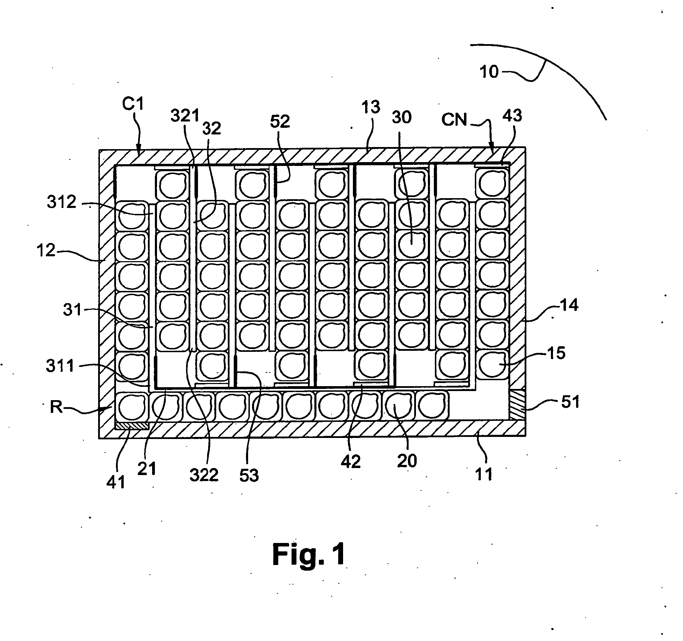

La compréhension de la présente invention sera facilitée à la lumière du schéma général de la figure 1, qui présente une vue de dessus d'un mode de réalisation particulier de l'automate défini ci-dessus.

Le plateau (10), qui peut être aussi appelé « table de culture » dans la présente description, est posé sur une table ou adapté à un châssis. Dans certains modes de réalisation de l'invention, le châssis est en mécano-soudure. Il est réalisé en acier inoxydable, et il est équipé de six pieds réglables en hauteur (de plus ou moins 40 mm) avec contreventement pour les pieds.

Le plateau (10) peut être d'une forme quelconque. Dans tous les cas, il est important que les quatre côtés à bords surélevés (11, 12, 13, 14) du plateau (10) délimitent un parallélépipède rectangle, c'est-à-dire soit une surface de forme rectangulaire, soit une surface de forme carrée. Dans les modes de réalisation préférés, le plateau (10) est de forme carrée ou rectangulaire.

Le plateau (10) peut être réalisé dans une grande diversité de matériaux. On comprend que le matériau dans lequel doit être réalisé le plateau (10) ne doit pas être altéré par les conditions d'environnement appliquées pour la culture ou le phénotypage des plantes, tout particulièrement les conditions d'hygrométrie. C'est la raison pour laquelle le plateau (10) est réalisé de préférence dans un matériau qui n'est pas altéré par l'humidité, tel qu'un matériau polymère de résistance mécanique appropriée, ou un métal choisi par exemple parmi le zinc, l'aluminium ou l'acier inoxydable. De manière particulièrement préférée, le plateau (10) est réalisé en aluminium.

Préférentiellement, la surface du plateau (10) est plane et lisse, de manière à permettre une translation aisée des supports mobiles (15) sur la totalité du circuit en boucle délimité par l'enchaînement comprenant la rangée (20) suivie de la succession des colonnes adjacentes (30) C1 à CN. Dans certains modes de réalisation, au lieu d'être lisse, la surface du plateau (10) comporte des systèmes de guidage à billes.

La hauteur des bords surélevés (11, 12, 13, 14) du plateau (10) n'est pas déterminante. On comprend qu'elle doit être suffisante pour que lesdits bords exercent une fonction de guidage des supports mobiles (15) le long du circuit en boucle délimité par la rangée (20) et la succession de colonnes adjacentes (30) C1 à CN, avec un risque réduit ou nul de déport ou de renversement des supports mobiles (15). De plus, la hauteur des bords surélevés (11, 12, 13, 14) du plateau (10) est en général suffisamment réduite pour ne pas gêner le positionnement des supports mobiles (15), préalable à la mise en oeuvre de l'automate. On comprend que la hauteur des bords surélevés (11, 12, 13, 14) du plateau (10) peut considérablement varier selon les modes de réalisation, notamment selon la taille des supports mobiles (15). A titre illustratif, dans les modes de réalisation de l'automate adaptés à la culture ou au phénotypage de plantes de petite taille, par exemple de plantes ayant une taille maximale de 30 centimètres, la hauteur des bords surélevés (11, 12, 13, 14) du plateau (10) peut aller de 1 à 10 centimètres.

Les matériaux dans lesquels sont réalisés les bords surélevés (11, 12, 13, 14) du plateau (10) sont du même type que les matériaux définis précédemment pour le plateau (10) puisqu'ils sont soumis aux mêmes contraintes d'environnement. Le matériau des bords surélevés (11, 12, 13, 14) peut être identique au matériau dans lequel est réalisé le plateau (10), ou distinct de celui-ci.

Les caractéristiques de hauteur et de type de matériau des guides (31, 32) sont similaires aux caractéristiques décrites ci-dessus pour les bords (11, 12, 13, 14) du plateau (10).

Dans l'ensemble de la présente description, les matériaux non spécifiquement cités sont de préférence en aluminium ou en acier peint, et la visserie est généralement en acier inoxydable.

Les supports mobiles (15) disposés sur le plateau (10) sont de préférence en polyéthylène usiné. Ils peuvent avoir une forme quelconque, dès lors que la combinaison de leur forme et de leur taille les rend aptes à être facilement translatés le long de la rangée (20) et des colonnes adjacentes (30) C1 à CN, en maintenant de préférence leur orientation sur la totalité du circuit en boucle délimité par la succession de la rangée (20) et des colonnes adjacentes (30) C1 à CN. Les supports mobiles (15) sont de préférence de forme carrée ou rectangulaire, afin d'éviter qu'ils ne subissent une rotation sur eux-mêmes lors de leur déplacement contrôlé sur la surface du plateau (10).

Tous les supports mobiles (15) placés simultanément sur le plateau (10), en vue de la réalisation d'un essai de culture ou de phénotypage, ont préférentiellement la même largeur. La largeur des supports mobiles (15) est adaptée de manière à permettre leur translation le long de la rangée (20) et de chacune des colonnes adjacentes (30) C1 à CN. Ainsi, la largeur des supports mobiles (15) est à la fois (i) suffisamment inférieure à la largeur de la rangée (20) et des colonnes adjacentes (30) C1 à CN pour permettre leur mobilité le long de ladite rangée et desdites colonnes et (ii) de valeur suffisamment grande pour que la translation des supports mobiles (15) n'entraîne pas un désaxement significatif desdits supports, par rapport à l'axe de la rangée (20) et des colonnes adjacentes (30) C1 à CN, un désaxement étant susceptible de provoquer un blocage d'un ou de plusieurs supports mobiles (15), ou même une rotation d'au moins 90° d'un ou de plusieurs des supports mobiles (15) par rapport à l'axe de ladite rangée ou desdites colonnes.

Un désaxement important d'un support mobile (15) peut consister en un inconvénient, même dans les situations dans lesquelles ledit désaxement ne provoque pas le blocage de la translation des supports mobiles (15) ; tout particulièrement lorsque l'automate de l'invention est mis en oeuvre pour réaliser un procédé de phénotypage des plantes. En effet, dans les modes de mise en oeuvre de l'automate de l'invention dans lesquels une ou plusieurs caractéristiques phénotypiques sont mesurées, notamment lorsqu'est effectuée une étape d'acquisition d'une image de chacune des plantes testées, un désaxement d'un ou de plusieurs supports mobiles (15) entre deux cycles de parcours du circuit en boucle peut provoquer l'identification erronée de différences survenues pour une plante donnée d'un cycle à l'autre.

La rangée (20) et chacune des N colonnes adjacentes (30) C1 à CN peuvent aussi être appelées « rail » dans la présente description. Lesdits « rails » correspondent donc à la rangée (20), qui peut aussi être appelée rangée R, et aux N colonnes adjacentes (30) C1 à CN. Les rails sont délimités par les quatre côtés à bords surélevés (11, 12, 13, 14) du plateau (10) et par les N guides intérieurs (21, 31, 32). La zone de déplacement des supports mobiles (15) est donc limitée à la surface du plateau (10), où ceux-ci circulent en boucle ou circuit fermé. La largeur de la rangée (20) et de chacune des colonnes adjacentes (30) C1 à CN est adaptée de manière à ce que les supports mobiles (15) soient translatés avec une résistance mécanique la plus réduite possible sur la totalité de la longueur du circuit en boucle défini précédemment.

Comme cela est illustré sur la figure 1, l'enchaînement de la rangée (20) suivie par la succession de chacune des N colonnes adjacentes (30) C1 à CN délimite un circuit en boucle ou circuit fermé, le long duquel les supports mobiles (15) peuvent circuler de manière guidée. Un cycle complet de déplacement d'un support mobile (15) donné est réalisé lorsque ledit support mobile (15) a pris successivement toutes les positions possibles le long dudit circuit en boucle ou circuit fermé. Un cycle ultérieur de déplacement est initié lorsque ledit support mobile (15) occupe une nouvelle fois une position identique à celle qu'il avait au début du cycle précédent.

L'automate de l'invention est équipé d'une pluralité de moyens de translation des supports mobiles (15), comme cela a déjà été indiqué précédemment dans la présente description. Lesdits moyens de translation sont disposés spécifiquement de manière à ce que leur mise en oeuvre, selon des séquences dans le temps qui seront détaillées ultérieurement, permette à chaque support mobile (15) de prendre successivement toutes les positions possibles à la surface du plateau (10), et plus précisément successivement toutes les positions possibles le long du circuit fermé délimité par l'enchaînement de la rangée (20) et des N colonnes adjacentes (30) C1 à CN.

Comme cela a été précédemment décrit dans la définition générale de l'automate de l'invention, ledit automate comprend une pluralité de moyens de translation des supports mobiles (15) sur la surface du plateau (10), et plus précisément sur la totalité du circuit en boucle décrit ci-dessus, respectivement :
- des moyens de translation des supports mobiles (15) selon un axe parallèle aux guides (31, 32), et
- des moyens de translation des supports mobiles (15) selon un axe parallèle à la rangée (20).

Ces deux types principaux de moyens de translation des supports mobiles (15) sont décrits en détail ci-dessous.

### Les moyens de translation selon un axe parallèle aux guides (31, 32)

Les moyens de translation selon un axe parallèle aux guides (31, 32) provoquent la translation des supports mobiles (15) respectivement d'une première extrémité (311, 321) vers une seconde extrémité (312, 322) de chacune des colonnes adjacentes (30) C1 à CN, dans le sens général de translation des supports mobiles (15) le long du circuit en boucle défini précédemment.

De manière générale, les moyens de translation des supports mobiles (15) selon un axe parallèle aux guides (31, 32) comprennent respectivement (i) un premier moyen (41), qui peut aussi être appelé « pousseur gauche » en référence à la figure 1, (ii) une première série de moyens (42), qui peuvent aussi être appelés « bielles basses » en référence à la figure 1 et (iii) une seconde série de moyens (43), qui peuvent aussi être appelés « bielles hautes » en référence à la figure 1. Ces trois types de moyens de translation selon un axe parallèle aux guides (31, 32) sont décrits plus en détail ci-après.

Ainsi, les moyens de translation des supports mobiles (15) selon un axe parallèle aux guides (31, 32) comprennent, respectivement :
- *un moyen de translation (41),* ou « pousseur gauche », localisé à l'extrémité de la rangée (20) qui est adjacente à la colonne C1, en contact avec le bord (11) du plateau (10), qui comprend un plan de poussée situé à l'extrémité externe du pousseur dirigée vers l'intérieur du plateau (10), l'axe du plan de poussée étant parallèle au bord (11) du plateau (10). Dans certains modes de réalisation, lorsque le pousseur gauche (41) est en position de repos, le plan de poussée dudit pousseur est en retrait par rapport à la paroi interne du bord (11) du plateau (10). Dans d'autres modes de réalisation, lorsque le pousseur gauche (41) est en position de repos, le plan de poussée dudit pousseur est aligné avec la paroi interne du bord (11) du plateau (10). Dans encore d'autres modes de réalisation, lorsque le pousseur gauche (41) est en position de repos, le plan de poussée peut être légèrement engagé dans la rangée (20), ledit plan de poussée débordant en conséquence du plan de la paroi interne du bord (11) du plateau (10). Dans ces derniers modes de réalisation, le débordement du plan de poussée du pousseur gauche (41) est réduit, de telle manière que l'engagement dudit plan de poussée dans la rangée (20) n'entraîne pas une diminution de la largeur de la rangée (20) susceptible de gêner la translation des supports mobiles (15). Le pousseur gauche (41) est relié à un moyen permettant le déplacement du plan de poussée selon un axe parallèle à l'axe de la colonne C1.
- *des moyens de translation (42),* ou « bielles basses », localisés à l'extrémité des colonnes de rang impair C3 à CN-1 qui est contact avec le guide (21), lesdites bielles basses (42) comprenant un plan de poussée pouvant être translaté selon un axe parallèle à l'axe desdites colonnes de rang impair. Les localisations possibles du plan de poussée des bielles basses (42) au repos, par rapport au plan du guide (21), peuvent être similaires à celles décrites ci-dessus pour le pousseur gauche (41) par rapport à la paroi interne du bord (11).
- des *moyens de translation (43),* ou « bielles hautes », localisés à l'extrémité des colonnes de rang pair C2 à CN qui est en contact avec le bord (13) du plateau (10), lesdites bielles hautes (43) comprenant un plan de poussée pouvant être translaté selon un axe parallèle à l'axe desdites colonnes de rang pair. Les localisations possibles du plan de poussée des bielles hautes (43) au repos, par rapport à la paroi interne du bord (13) du plateau (10), peuvent être similaires à celles décrites précédemment pour le pousseur gauche (41) par rapport à la paroi interne du bord (11).

Dans certains modes de réalisation de l'automate selon l'invention, le pousseur gauche (41), les bielles basses (42) et les bielles hautes (43) sont actionnés, simultanément ou de manière séparée dans le temps, par l'exécution d'un tour complet de moteurs verticaux, de préférence de trois moteurs verticaux, respectivement :
- un premier moteur pour actionner le pousseur gauche (41),
- un second moteur pour actionner les bielles basses (42), et
- un troisième moteur pour actionner les bielles hautes (43).

Une fois leur mouvement effectué, ces moyens de translation des supports mobiles (15) reprennent leur position initiale de repos, par exemple grâce à la présence d'un ou de plusieurs ressorts de rappel dans le mécanisme d'actionnement.

### Les moyens de translation selon un axe parallèle à la rangée (20)

Les moyens de translation selon un axe parallèle à la rangée (20) provoquent la translation des supports mobiles (15) selon un axe perpendiculaire à l'axe de la translation desdits supports mobiles (15) provoquée par les moyens de translation (41, 42, 43) décrits ci-dessus.

De manière générale, les moyens de translation des supports mobiles (15) selon un axe parallèle à la rangée (20) comprennent respectivement (i) un premier moyen (51), qui peut aussi être appelé « pousseur retour » ou « pousseur droit » en référence à la figure 1, (ii) une première série de moyens (52), qui peuvent aussi être appelés « râteaux hauts », destinés à provoquer la translation des supports mobiles (15) dans une direction allant de la gauche vers la droite en référence à la figure 1 et (iii) une deuxième série de moyens (53), qui peuvent aussi être appelés « râteaux bas », destinés à provoquer la translation des supports mobiles (15) dans une direction allant de la droite vers la gauche en référence à la figure 1. Ces trois types de moyens de translation selon un axe parallèle à la rangée (20) sont décrits plus en détail ci-après.

Ainsi, les moyens de translation des supports mobiles (15) selon un axe parallèle à l'axe de la rangée (20) comprennent, respectivement :
- *un moyen de translation (51),* ou « pousseur droit », situé à l'extrémité de la rangée (20) qui est adjacente à la colonne CN, en contact avec le bord (14) du plateau (10). Le pousseur droit (51) comprend un plan de poussée situé à l'extrémité du pousseur dirigée vers l'intérieur du plateau (10), dont l'axe est parallèle au bord (14) du plateau (10). Dans certains modes de réalisation, lorsque le pousseur droit (51) est en position de repos, le plan de poussée dudit pousseur est en retrait par rapport à la paroi interne du bord (14) du plateau (10). Dans d'autres modes de réalisation, lorsque le pousseur droit (51) est en position de repos, le plan de poussée dudit pousseur est aligné avec la paroi interne du bord (14) du plateau (10). Dans encore d'autres modes de réalisation, lorsque le pousseur droit (51) est en position de repos, le plan de poussée peut être légèrement engagé dans la rangée (20), ledit plan de poussée débordant en conséquence du plan de la paroi interne du bord (14) du plateau (10). Dans ces derniers modes de réalisation, le débordement du plan de poussée du pousseur droit (51) est réduit, de telle manière que l'engagement dudit plan de poussée dans la rangée (20) n'entraîne pas une diminution de la largeur de ladite rangée (20), susceptible de gêner la translation des supports mobiles (15). Le pousseur droit (51) est relié à un moyen permettant le déplacement du plan de poussée selon un axe parallèle à l'axe de la rangée (20).
- *des moyens de translation (52),* ou « râteaux hauts », pour le déplacement des supports mobiles (15) des colonnes de rang impair C1 à CN-1 vers les colonnes de rang pair adjacentes C2 à CN. Les râteaux hauts (52) comprennent un plan de poussée dont l'axe est parallèle à l'axe des colonnes C1 à CN, ledit plan de poussée pouvant être translaté selon un axe parallèle à l'axe de la rangée (20) ou du bord (13) du plateau (10). Les localisations possibles du plan de poussée des râteaux hauts (52) au repos, par rapport respectivement à la paroi interne du bord (12) et à l'extrémité (321) de la paroi des guides (32), peuvent être similaires à celles précédemment décrites pour le pousseur droit (51) par rapport à la paroi interne du bord (14).
- *des moyens de translation (53),* ou « râteaux bas », pour le déplacement des supports mobiles (15) des colonnes de rang pair C2 à CN-2 vers les colonnes de rang impair adjacentes C3 à CN-1. Les râteaux bas (53) comprennent un plan de poussée dont l'axe est parallèle à l'axe des colonnes C1 à CN, ledit plan de poussée pouvant être translaté selon un axe parallèle à l'axe de la rangée (20) ou du bord (13) du plateau (10). Les localisations possibles du plan de poussée des râteaux bas (53) au repos, par rapport à l'extrémité (311) de la paroi des guides (31), peuvent être similaires à celles décrites précédemment pour le pousseur droit (51) par rapport à la paroi interne du bord (14).

Dans certains modes de réalisation de l'automate selon l'invention, le pousseur droit (51), les râteaux hauts (52) et les râteaux bas (53) sont actionnés, simultanément ou de manière séparée dans le temps, par l'exécution d'un tour complet de moteurs horizontaux, de préférence de trois moteurs horizontaux, respectivement :
- un premier moteur pour actionner le pousseur droit (51),
- un second moteur pour actionner les râteaux hauts (52), et
- un troisième moteur pour actionner les râteaux bas (53).

Une fois leur mouvement effectué, ces moyens de translation des supports mobiles (15) reprennent leur position initiale de repos, par exemple grâce à la présence d'un ou de plusieurs ressorts de rappel dans le mécanisme d'actionnement.

Dans la présente description, les termes distincts « pousseur gauche », « pousseur droit », « bielle haute », « bielle basse », « râteau haut » et « râteau bas » sont utilisés principalement pour des raisons de clarté de l'exposé, afin de mieux distinguer les divers moyens de translation équipant l'automate. Les termes distincts qui sont ainsi utilisés pour distinguer ces différents moyens de translation ne signifient pas obligatoirement que les différents moyens de translation diffèrent dans leur structure.

Ainsi, dans certains modes de réalisation de l'automate de l'invention, la totalité des moyens de translation sont de structure similaire ou identique. Dans d'autres modes de réalisation de l'invention, les moyens de translation peuvent être partiellement identiques entre eux. Par exemple, dans certains modes de réalisation de l'automate, les moyens de translation désignés par un terme identique ci-dessus, sont de structure identique entre eux. Dans encore d'autres modes de réalisation de l'automate de l'invention, les moyens de translation des supports mobiles (15) possèdent chacun leur structure propre, chaque moyen de translation individuel étant structurellement distinct de chacun des autres.

Les moyens de translation équipant l'automate de l'invention sont réalisés dans un matériau dont la résistance mécanique et la résistance aux conditions d'environnement sont appropriées, l'identité dudit matériau pouvant être choisi aisément par l'homme du métier, au vu de ses simples connaissances générales. Dans certains modes de réalisation de l'automate, les moyens de translation sont réalisés en métal, par exemple en aluminium ou en acier inoxydable, de préférence en acier inoxydable.

Dans certains modes de réalisation, les bielles basses (42) et hautes (43) sont de type bielle pivotante, articulée sur un axe en acier inoxydable calibré et montée sur un compensateur à ressort. Dans certains modes de réalisation, les râteaux hauts (52) et bas (53) sont de type râteau avec palettes soudées par points électriques, monté sur des patins à billes, par exemple sur des patins à billes INA type KUE 15.

Les mécanismes de commande, pour le déplacement des supports mobiles (15), sont préférentiellement placés sous le plateau (10).

L'automate selon l'invention est très compact, ce qui est dû au fait que la quasi-totalité de la surface du plateau (10) peut être occupée par les supports mobiles (15), la partie réduite restante de la surface du plateau (10) étant occupée par les guides (21, 31, 32). La combinaison spécifique des caractéristiques décrites ci-dessus de l'automate selon l'invention permet la disposition et la circulation de nombreux supports mobiles (15) sur une petite surface. De plus, la valeur de la surface du plateau (10) de l'automate selon l'invention peut être aisément déterminée ou adaptée par l'homme du métier, selon la taille des supports mobiles (15) utilisés, et selon leur nombre. Dans certains modes de réalisation de l'automate selon l'invention, au moins 100, mieux au moins 500, supports mobiles (15) sont disposés sur la surface du plateau (10). Cependant, les dimensions de la surface du plateau (10) peuvent être adaptées pour une mise en oeuvre de l'automate de l'invention avec un nombre de supports mobiles (15) inférieur à 100.

A partir de l'illustration de la figure 1, l'homme du métier comprend aisément qu'un nombre minimum de supports mobiles (15) doit être disposé à la surface du plateau (10) pour permettre la translation efficace de ces derniers à chaque étape d'actionnement des moyens de translation définis précédemment et permettre la circulation de chaque support mobile (15) sur la totalité du circuit en boucle dans un temps le plus réduit possible, de sorte que chacun des supports mobiles (15) puisse prendre successivement toutes les positions possibles le long dudit circuit en boucle en un temps le plus réduit possible.

Bien que l'automate soit destiné à être utilisé pour la culture ou le phénotypage d'une pluralité de plantes, il n'est pas obligatoire que chaque support mobile (15) présent sur la surface du plateau (10) comporte une plante. Par définition, chaque support mobile (15) comportant une plante comporte également un substrat de culture adapté à ladite plante. Ainsi, les supports mobiles (15) comportant une plante supportent un substrat de culture dans lequel on a planté un végétal. Le substrat de culture peut éventuellement être placé dans un conteneur, lequel est à son tour placé dans un support mobile (15). Par substrat de culture, ou motte, on entend tout substrat permettant de cultiver une plante et adapté à la culture de celle-ci dans des conditions choisies. En fonction de l'espèce de plante à cultiver et des conditions de culture désirées, l'homme du métier peut déterminer à l'avance le substrat de culture adapté, sur la base de ses simples connaissances générales. De préférence, des substrats de culture supportant des plantes sont disposés dans au moins une partie des supports mobiles (15). Lorsque l'automate de l'invention est utilisé pour le phénotypage de plantes, des substrats de culture supportant des plantes sont disposés de préférence sur la totalité des supports mobiles (15). Logiquement, plus les plantes présentes sur le plateau (10) sont nombreuses, plus fiable sera l'analyse statistique des caractéristiques phénotypiques des plantes testées. Ainsi, de préférence, chaque support mobile (15) disposé sur le plateau (10) de l'automate supporte un substrat de culture et une plante.

Lors de la circulation des plantes sur la surface du plateau (10), il peut s'avérer utile de suivre l'évolution du poids de chacune d'entre elles, à chaque boucle ou cycle de déplacement effectué. Une telle opération nécessite de peser chaque support mobile (15) au moins une fois au cours de chaque cycle, par exemple au moyen d'une balance adaptée. L'automate peut ainsi être équipé d'au moins un moyen de pesée d'un support mobile (15), par exemple d'un capteur de pesage SCAIME de norme IP65 et de dimensions 102 mm x 22 mm x 16 mm. Le ou les moyens de pesée affleurent généralement à la surface du plateau (10), sous les supports mobiles (15). Le ou les moyen(s) de pesée peuvent être placés n'importe où sur le circuit en boucle des supports mobiles (15), de préférence dans un angle, de façon à pouvoir prendre une mesure sans être perturbés par d'éventuels supports mobiles (15) trop proches.

Selon un autre aspect, il est important de délivrer aux plantes un apport contrôlé en eau. De même, il est important de délivrer aux plantes un apport contrôlé en substances nutritives. Bien que pouvant être apporté sous n'importe quelle forme, comme par exemple sous forme de granulés, l'engrais est de préférence apporté sous forme liquide, le cas échéant simultanément avec l'apport en eau. Le volume d'eau et/ou de solution nutritive délivré peut être choisi par l'expérimentateur.

Ainsi, dans certains modes de réalisation, l'automate de l'invention est équipé d'au moins un moyen d'apport en eau ou en solution nutritive nécessaire à la croissance des plantes aux substrats de culture supportant les plantes disposés dans des supports mobiles (15). Dans ces modes de réalisation, l'automate peut être pourvu d'un ou de plusieurs moyens d'apport en eau seulement, d'un ou de plusieurs moyens d'apport en solution nutritive nécessaire à la croissance des plantes seulement, ou encore d'un ou de plusieurs moyens d'apport simultané en eau et en solution nutritive nécessaire à la croissance des plantes.

Avantageusement, ledit moyen d'apport en eau ou en solution nutritive nécessaire à la croissance des plantes est localisé à l'aplomb d'un moyen de pesée des supports mobiles (15). En effet, dans de tels modes de réalisation, il est alors possible de mesurer la quantité d'eau et/ou de solution nutritive nécessaire à la croissance des plantes précisément délivrée au niveau du substrat de culture d'une plante située au-dessus d'une balance. Suivant le moyen de distribution d'eau et/ou de solution nutritive choisi, tel qu'une pompe à membrane ou une pompe péristaltique, la précision du volume de solution délivré ne sera pas la même, et la pesée permet une vérification a posteriori de la quantité d'eau et/ou de solution nutritive nécessaire à la croissance des plantes délivrée. Cela permet, si nécessaire, de compléter la distribution en délivrant un volume additionnel d'eau ou de solution nutritive nécessaire à la croissance des plantes.

Lorsque l'automate selon l'invention est utilisé pour une analyse phénotypique des plantes, celui-ci est en outre équipé d'au moins un moyen de mesure d'une caractéristique phénotypique d'une plante. De préférence, ledit moyen de mesure consiste en un dispositif d'acquisition d'images, encore appelé dispositif de prise de vues. Il peut alors s'agir par exemple d'un appareil photographique ou d'une caméra numérique. Mais il peut également s'agir d'un tout autre type de capteur, permettant par exemple des mesures de rayonnement visible et/ou infrarouge, de fluorescence chlorophyllienne, ou encore de tout autre instrument capable de réaliser une mesure phénotypique. Dans certains modes de réalisation, le moyen de mesure possède un support, lequel est de préférence réalisé en acier inoxydable et fixé sur le châssis de la table.

Il est possible d'envisager de placer une pluralité d'autres dispositifs de mesure ou de détection sur le plateau (10) de l'automate ou à son immédiate périphérie. Par exemple, l'automate peut être équipé d'un lecteur de codes à barres. Lorsqu'est apposé un code à barres sur chacun des supports mobiles (15), la présence d'un dispositif lecteur de code à barres dans l'automate permet d'identifier chaque plante et de connaître le degré d'achèvement d'un cycle donné de déplacement des supports mobiles (15). L'automate peut également être équipé de tout autre moyen permettant d'identifier spécifiquement chaque support mobile (15), y compris des dispositifs d'identification par radiofréquence.

Comme cela a déjà été mentionné précédemment, l'homme du métier comprend aisément que les dimensions de l'automate de l'invention peuvent considérablement varier :
- selon la taille des plantes à cultiver, c'est-à-dire selon la taille des supports mobiles (15) sur lesquels les substrats de culture supportant des plantes doivent être disposés, et
- selon le nombre de supports mobiles (15) qui doivent être disposés sur la surface du plateau (10).

Selon la taille, et en conséquence selon le poids, des supports mobiles (15) sur lesquels sont disposés le substrat de culture et les plantes, on adapte la puissance nécessaire aux moyens de poussée permettant de réaliser la translation des supports mobiles (15). Lorsqu'il est équipé avec des moyens de poussée d'une puissance et d'une résistance mécanique adaptée, l'automate de l'invention peut être utilisé pour la culture ou le phénotypage de plantes de grande taille, y compris des arbustes et des arbres jeunes, par exemple des arbres âgés de moins de cinq ans. Toutefois, en général, l'automate de l'invention est plutôt destiné à la culture ou au phénotypage de plantes de taille moyenne, d'une hauteur au plus égale à 1,5 mètres, facilement déplaçables.

### Installation pour la culture ou le phénotypage d'une pluralité de plantes dans un environnement contrôlé

Un mode de réalisation particulier d'une installation de culture ou de phénotypage selon l'invention est illustré à la figure 6 et est plus précisément détaillé ci-dessous. Dans le mode de réalisation particulier de l'installation illustré sur la figure 6, aucun support mobile (15) n'a été disposé sur le plateau (10).

Comme représenté sur le schéma de la figure 6, ce mode de réalisation d'une installation de culture ou de phénotypage comprend :
- un automate de culture ou de phénotypage tel que défini précédemment dans la présente description, ledit automate comprenant :
   - un moteur (141) d'actionnement du pousseur gauche (41),
   - un moteur (142) d'actionnement des bielles basses (42),
   - un moteur (143) d'actionnement des bielles hautes (43),
   - un moteur (151) d'actionnement du pousseur droit (51),
   - un moteur (152) d'actionnement des râteaux hauts (52),
   - un moteur (153) d'actionnement des râteaux bas (53),
   - un moyen (110) de pesée des supports mobiles (15),
   - un moyen (120) d'apport en eau ou en solution nutritive nécessaire à la croissance des plantes,
   - un moyen (130) d'acquisition d'images des plantes disposées sur les supports mobiles (15),
- des moyens (160) de contrôle et de commande de chacun des moteurs (141, 142, 143, 151, 152, 153) équipant l'automate,
- un moyen (170) de contrôle et de commande du moyen (110) de pesée des supports mobiles (15),
- un moyen (180) de contrôle et de commande du moyen (120) d'apport en eau ou en solution nutritive nécessaire à la croissance des plantes,
- un moyen (190) de contrôle et de commande du moyen (130) d'acquisition d'images, et
- un calculateur numérique (100) relié à chacun des moyens de contrôle et de commande (160, 170, 180, 190) décrits ci-dessus, et dont la mémoire est chargée avec un ensemble d'instructions pour la mise en oeuvre coordonnée desdits moyens de contrôle et de commande (160, 170, 180, 190).

Comme cela est représenté sur le schéma de la figure 7, dans certains modes de réalisation particuliers de l'installation selon l'invention, un moyen (110) de pesée, un moyen (120) d'apport en eau et/ou en solution nutritive et un moyen (130) d'acquisition d'images peuvent être concentrés en un même emplacement sur le circuit de déplacement des plantes, par exemple à l'emplacement délimité par les bords (13, 14) du plateau (10).

Comme cela a été décrit précédemment, les moyens de translation (41, 42, 43, 51, 52, 53) des supports mobiles (15) de l'automate sont de préférence actionnés par un total de six moteurs (141, 142, 143, 151, 152, 153). Ceux-ci peuvent être identiques ou différents entre eux, ou bien certains identiques entre eux et les autres distincts des précédents. Pour le bon fonctionnement de l'automate, il est nécessaire que ces moteurs soient coordonnés et donc pilotés avec précision. Cela implique que l'automate soit relié à au moins un moyen de contrôle et de commande (160) des moteurs (141, 142, 143, 151, 152, 153) actionnant les moyens de translation (41, 42, 43, 51, 52, 53) des supports mobiles (15).

La présente invention concerne donc également une installation utilisable pour la culture ou le phénotypage d'une pluralité de plantes dans un environnement contrôlé, comprenant un automate tel que précédemment décrit et au moins un moyen (160) de contrôle et de commande des moyens de translation (41, 42, 43, 51, 52, 53) des supports mobiles (15). Dans le mode de réalisation de l'installation représenté sur la figure 6, un seul moyen (160) de contrôle et de commande de la translation des supports mobiles (15) est utilisé pour commander et contrôler de manière coordonnée la totalité des six moteurs (141, 142, 143, 151, 152, 153).

Comme cela est illustré sur la figure 6, chacun des moteurs (142, 143, 152, 153) entraîne simultanément le mouvement respectivement des bielles basses (42), des bielles hautes (43), des râteaux hauts (52) et des râteaux bas (53). La transmission du mouvement de chacun desdits moteurs (142, 143, 152, 153) vers les moyens de translation (42, 43, 52, 53) précités peut être réalisée à l'aide d'un arbre de transmission qui est mécaniquement relié directement, ou par l'intermédiaire de pignons réducteurs, au pignon de sortie du moteur. L'arbre est lui-même relié mécaniquement au mécanisme d'actionnement des moyens de translation (42, 43, 52, 53) correspondants. Par exemple, l'arbre relié mécaniquement en amont au pignon de sortie du moteur (142) est relié en aval au mécanisme d'actionnement de chacune des bielles basses (42). Dans ce mode de réalisation particulier, chacun des moyens de translation (42, 43, 52, 53) des supports mobiles (15) est relié à l'arbre correspondant à l'aide d'un système d'engrenages ou de cames. Par exemple, l'arbre de transmission comprend un pignon à engrenages ou à cames relié au mécanisme d'entraînement de chacun des moyens de translation (42, 43, 52, 53) des supports mobiles (15) considéré. Illustrativement, en référence à la figure 6, et bien que non représenté en détail sur ladite figure 6, l'arbre de transmission qui est relié mécaniquement au moteur (142) comprend un pignon à engrenages ou à cames localisé en regard, selon un axe parallèle à l'axe des colonnes C1 à CN du plateau (10), du mécanisme d'actionnement de chacune des bielles basses (42). L'actionnement des moyens de translation (42, 43, 52, 53) peut être effectué grâce à un système de cames et d'un ressort de rappel. Illustrativement, l'arbre relié mécaniquement au moteur (142) comprend, en regard de chacune des bielles basses (42), une roue à cames solidaire dudit arbre, le bord externe de la roue à cames étant en contact permanent avec une tige reliée au plan de poussée de la bielle basse (42) correspondante, ladite tige de liaison étant perpendiculaire au plan de poussée. De plus, les bielles basses (42) sont reliées à un ressort de rappel qui les maintient en position de repos lorsqu'il n'existe aucune autre contrainte mécanique. Dans ce mode de réalisation, une révolution d'un tour complet de l'arbre de transmission, et donc également de la roue à cames provoque (i) lors du premier demi-tour de la roue à cames, la translation de chaque bielle basse (42) et son engagement respectivement dans chacune des colonnes C3 à CN-1, puis (ii) lors du second demi-tour de la roue à cames, le retour de chaque bielle basse (42) vers la position de repos initiale, grâce à l'action du ressort de rappel. La description du mode de réalisation ci-dessus, en relation avec le mécanisme d'actionnement des bielles basses (42), peut être étendue au mécanisme d'actionnement de la totalité des moyens de translation (41, 42, 43, 51, 52, 53) des supports mobiles (15) équipant l'automate de l'invention.

Préférentiellement, les moteurs (141, 142, 143, 151, 152, 153) consistent en des moteurs électriques du type « pas-à-pas », c'est-à-dire des moteurs transformant une impulsion électrique en une énergie mécanique permettant le déplacement angulaire du rotor, appelé « pas », bien connus de l'homme du métier. Les moteurs pas-à-pas englobent les moteurs à aimants permanents, les moteurs à réluctance variable et les moteurs mixtes consistant en des moteurs à réluctance variable dont le rotor est aimanté.

Dans certains modes de réalisation préférés, on utilise des moteurs (a)synchrones avec un réducteur et des capteurs de mouvement. Les moteurs (a)synchrones avec un réducteur peuvent être des motoréducteurs, par exemple de type Oriental Motor 5RK60RGU PWE plus 5GU60KV (avec un rapport 1/180) plus un variateur ES02, alimentés par un courant alternatif de 230 volts, de puissance 60 watts, avec variateur de fréquence pour le pilotage de la vitesse ainsi que des accélérations et du freinage. La liaison moteur-pousseur peut être assurée par un système de bielle sur rotule, de préférence équipée d'un compensateur à ressort pour palier aux éventuelles variations de côte sur les supports mobiles (15), et les commandes de déplacement en sortie des réducteurs peuvent être de type bielle/manivelle. Quant aux capteurs de mouvement ou « capteurs de fin de course », il peut s'agir de capteurs inductifs, par exemple de type IFM, à connecteur M12 ou M8, permettant de transmettre des informations sur les positions extrêmes des supports mobiles (15). Ils sont de préférence actionnés par les bielles de commande des pousseurs, situées sous le plateau (10).

Le plus généralement, le pilotage des moyens de translation des supports mobiles (15) est réalisé au moyen d'un calculateur numérique (100), qui peut aussi être appelé « ordinateur de supervision ».

Dans le mode de réalisation de l'installation pour la culture ou le phénotypage de plantes illustré dans la figure 6, le calculateur numérique (100) comprend une unité centrale (101) équipée d'au moins un processeur numérique et d'au moins un moyen de stockage de données. L'unité centrale (101) est reliée à un dispositif (102) d'affichage d'information et à un dispositif (103) d'entrée de données. Sur la figure 6, le calculateur numérique (100) comprend aussi un dispositif (104) de pointage, qui peut être relié directement à l'unité centrale (101), ou indirectement à l'unité centrale (101) par l'intermédiaire du dispositif (103) d'entrée de données.

Le calculateur numérique (100) est relié aux divers moyens de contrôle et de commande (160, 170, 180, 190). Dans le mode de réalisation représenté sur la figure 6, les moyens de contrôle et de commande (160, 170, 180, 190) consistent en des cartes électroniques qui sont en fait logées dans le boîtier de l'unité centrale (101). Dans d'autres modes de réalisation de l'installation selon l'invention, un, plusieurs ou tous les moyens de contrôle et de commande (160, 170, 180, 190) sont physiquement séparés de l'unité centrale (101) et reliés à celle-ci par des moyens de liaison appropriés, en général par des câbles électriques adaptés. Dans certains modes de réalisation de l'installation de l'invention, les moyens de contrôle et de commande (160, 170, 180, 190) sont physiquement réunis sur une seule carte électronique, ou sur un nombre de cartes électroniques inférieur au nombre de moyens de contrôle et de commande (160, 170, 180, 190).

De préférence, l'automate est en outre équipé d'au moins un moyen (110) de pesée des supports mobiles (15), et d'au moins un moyen (120) d'apport en eau ou en solution nutritive nécessaire à la croissance des plantes.

Préférentiellement, comme illustré à la figure 7, le moyen (120) d'apport en eau ou en solution nutritive nécessaire à la croissance des plantes est localisé à l'aplomb d'un moyen (110) de pesée des supports mobiles (15), tel que précédemment décrit. Cette disposition particulière du moyen (120) d'apport en eau ou en solution nutritive, par rapport au moyen (110) de pesée permet, lors de l'exécution du procédé de culture ou de phénotypage des plantes, de réaliser une étape de contrôle du volume d'eau ou de solution nutritive délivrée à chaque plante par rapport à une valeur de consigne prédéterminée. Dans ces modes de réalisation, ladite installation comprend au moins un moyen (170) de contrôle et de commande relié audit moyen (110) de pesée et au moins un moyen (180) de contrôle et de commande relié audit moyen (120) d'apport en eau ou en solution nutritive nécessaire à la croissance des plantes, permettant d'ajuster la quantité d'eau et/ou de solution nutritive nécessaire à la croissance des plantes délivrée en fonction du poids du support mobile (15) mesuré.

Ledit ou lesdits moyens (110) de pesée et ledit ou lesdits moyens (120) d'apport en eau ou en solution nutritive nécessaire à la croissance des plantes sont contrôlés et commandés par l'ordinateur de supervision (100) ci-dessus, auquel ils sont reliés par des moyens de liaison électriques et/ou électroniques.

Dans le mode de réalisation de l'installation qui est représenté sur la figure 6, le moyen (120) d'apport en eau ou en solution nutritive comprend un moyen (121) d'apport en eau et un moyen (122) d'apport en solution nutritive nécessaire à la croissance des plantes. Chacun des moyens (121, 122) comprend un dispositif de pompe qui est, dans le sens d'écoulement des fluides, en communication fluidique (i) avec un dispositif d'alimentation en eau ou en solution nutritive pour les plantes localisé en amont et (ii) avec une tubulure unique de distribution d'un mélange eau/ solution nutritive localisée en aval. Ainsi, dans le mode de réalisation de la figure 6, une tubulure de sortie unique délivre à la fois l'eau et la solution nutritive nécessaire à la croissance des plantes. Tout autre mode de réalisation à la portée de l'homme du métier est également englobé, y compris des moyens (121) et (122) comprenant des tubulures de sortie séparées.

Comme cela a déjà été indiqué, les pompes équipant les moyens (121, 122) peuvent consister en des pompes péristaltiques d'un type connu. L'utilisation de pompes péristaltiques permet un contrôle précis du volume de liquide pompé et délivré. Lorsque l'installation est en fonctionnement, au moins un moyen de stockage de données du calculateur numérique (100) est chargé avec un programme d'ordinateur, lequel comprend une suite d'instructions, y compris des instructions qui permettent à l'automate d'ajuster la quantité d'eau et/ou de solution nutritive nécessaire à la croissance des plantes délivrée, en fonction du poids du support mobile (15) qui a été mesuré.

Une pesée de vérification, effectuée ultérieurement à la distribution d'eau et/ou de solution nutritive, permet de connaître la quantité d'eau et/ou de solution nécessaire à la croissance des plantes précisément délivrée initialement, et éventuellement de compléter une distribution insuffisante par rapport aux valeurs de consigne préalablement déterminées et appliquées par les moyens de contrôle et de commande. Le poids mesuré peut être affiché en direct sur l'afficheur du moyen (110) de pesée, ou bien sur le dispositif (102) d'affichage du calculateur numérique (100). Des dispositifs d'affichage peuvent également être localisés sur un pupitre disposé à proximité de l'automate.

Dans certains modes de réalisation de l'installation, l'automate est en outre équipé d'au moins un moyen de mesure d'une caractéristique phénotypique d'une plante, tel que précédemment décrit. Dans ces modes de réalisation, ladite installation comprend au moins un moyen de contrôle et de commande dudit ou desdits moyens de mesure et au moins un moyen de stockage des données générées par ledit ou lesdits moyens de mesure.

Généralement, le pilotage de chaque moyen de mesure d'une caractéristique phénotypique d'une plante est réalisé par l'ordinateur de supervision (100), qui est relié à tout moyen de mesure d'une caractéristique phénotypique par des moyens de liaison électriques et/ou électroniques. Le stockage des données générées par chaque moyen de mesure est également réalisé au moyen de l'ordinateur de supervision (100).

Dans le mode de réalisation de l'installation pour la culture ou le phénotypage des plantes qui est représenté sur la figure 6, l'un des moyens de mesure d'une caractéristique phénotypique des plantes consiste en un moyen (130) d'acquisition d'images. Il s'agit préférentiellement d'un dispositif numérique de prise de vues, tel qu'un appareil photographique numérique ou une caméra numérique, muni d'un capteur numérique d'un type quelconque, par exemple du type CCD (pour « Charge Couple Device ») ou CMOS (pour « Complementary Métal Oxide Semi-conductor »). Comme illustré à la figure 7, celui-ci peut être situé à l'aplomb des moyens (110) de pesée et des moyens (120) d'apport en eau et/ou en solution nutritive.

Le moyen (130) d'acquisition d'images est relié au moyen (190) de contrôle et de commande, ce dernier étant lui-même relié à l'unité centrale (101) du calculateur numérique (100). Les données numériques des images peuvent être, au moins temporairement, conservées dans un moyen de stockage de données inclus dans le dispositif (130) d'acquisition d'images ou dans le moyen (190) de contrôle et de commande auquel il est relié. Toutefois, pour réaliser la mesure d'une caractéristique phénotypique des plantes, les données numériques des images sont transférées, au moins temporairement, dans un moyen de stockage de données du calculateur numérique (100) afin d'être traitées de manière appropriée.

En général, pour la mesure d'au moins une caractéristique phénotypique d'une plante à partir des données contenues dans le fichier d'une image numérique, la mémoire du calculateur numérique (100) est chargée avec un programme d'ordinateur contenant une suite d'instructions d'analyse d'images. En exécutant un tel programme d'ordinateur à partir de données numériques des images des plantes, on mesure au moins une caractéristique phénotypique de la plante photographiée ou filmée, tels que (i) la hauteur et/ou la largeur de la plante, (ii) la surface foliaire, (iii) la couleur des tiges, des feuilles ou des fleurs, (iv) l'architecture générale de la plante y compris l'angle des feuilles par rapport à la tige, à la branche ou au tronc, ou encore (v) une mesure de la biomasse. Pour réaliser la mesure d'au moins une caractéristique phénotypique d'une plante, on peut utiliser un programme de traitement numérique connu, par exemple un programme d'ordinateur choisi parmi ceux décrits dans la demande internationale PCT n° WO 90/14635, dans le brevet européen n°EP 1 154 370, dans les brevets des Etats-Unis d'Amérique n°US 5,841,883, US 5,206,918 et US 5,253,302, ou encore dans l'article de Granier et al. (2006, New Phytologist, Vol. 169 : 623-635). Un exemple d'image de la surface foliaire d'une plante qui peut être extraite d'une photographie numérique soumise à une analyse automatique d'image par un tel programme d'ordinateur est représentée à la figure 8.

Dans certains modes de réalisation, les données générées par l'acquisition d'images permettent, après traitement de ces données par un programme d'ordinateur approprié, de déterminer si le support mobile (15) placé dans le champ de la lentille du dispositif d'acquisition d'images comprend ou non une plante. Cela peut permettre d'éviter à l'utilisateur d'entrer préalablement, dans l'ordinateur de supervision (100), les données relatives à la présence ou à l'absence d'une plante en fonction du support mobile (15) considéré. Cependant, ce système de sélection n'est valable que dans le cas où toute plante présente dans les supports mobiles (15) possède une surface foliaire non nulle.

Les données d'analyse d'images et/ou les valeurs de mesure d'au moins une caractéristique phénotypique des plantes sont stockées dans la mémoire du calculateur numérique (100). Une fois stockées, ces valeurs peuvent être utilisées dans des calculs permettant d'évaluer les résultats de l'essai de culture ou de phénotypage.

Un mode de mise en oeuvre de l'installation ci-dessus est décrit à l'exemple 2.

Pour une utilisation optimale de l'automate, il est souhaitable, voire même nécessaire dans le cas d'une analyse phénotypique, que les conditions physiques de l'environnement dans lequel est disposé l'automate puissent être fixées et ensuite contrôlées. Dans ce cas, l'automate est disposé dans une enceinte de culture de plantes, et ladite installation comprend en outre au moins un moyen de contrôle et de commande d'au moins une condition physique de l'environnement dans lequel est disposé l'automate.

Par « enceinte de culture », on entend au sens de la présente invention tout lieu clos dans lequel peuvent être cultivés des plantes, que ce soit par exemple une armoire de culture, un module de culture, une chambre de culture, une pièce de culture, tels qu'on en rencontre en laboratoire, ladite enceinte de culture ayant un volume adapté pour contenir l'automate. De façon optimale, la taille de l'enceinte de culture est adaptée à la taille de l'automate.

Ladite condition physique de l'environnement dans lequel est disposé l'automate qui est contrôlée et commandée est généralement choisie parmi la valeur d'hygrométrie, l'éclairement et la température, mais on peut également envisager de contrôler la pression atmosphérique de l'environnement dans lequel est disposé l'automate, ou la composition chimique de l'atmosphère dans laquelle se trouve l'automate, ou encore tout autre paramètre physique susceptible d'influencer la croissance des plantes.

Le contrôle est effectué au moyen de capteurs présents à proximité de l'automate. Quant à la commande, elle est effectuée au moyen d'appareils tels qu'un climatiseur, un humidificateur, un système de pressurisation, un système d'éclairage, etc... De préférence, les capteurs sont directement reliés par des moyens électriques et/ou électroniques auxdits appareils, lesquels ont été préréglés et sont capables d'adapter leur réponse en fonction des données mesurées par les capteurs. Cependant, on peut également envisager que les informations transitent par l'ordinateur de supervision (100) auquel lesdits capteurs et appareils sont alors reliés par des moyens électriques et/ou électroniques, l'ordinateur de supervision se chargeant de piloter lesdits appareils en fonction des données mesurées par lesdits capteurs, en fonction des commandes préétablies par l'utilisateur.

Dans le cas où un ou plusieurs autres dispositifs éventuels seraient placés sur le plateau (10) de l'automate ou à sa périphérie, comme par exemple un lecteur de codes à barres, alors ladite installation ne manquerait pas de comprendre en outre au moins un moyen de contrôle et de commande de ce ou de ces dispositifs.

Préférentiellement, le câblage disposé sous le plateau (10) est réuni sur un bornier dans un coffret ; et l'installation est munie d'un arrêt d'urgence, de préférence de type bouton poussoir, accessible sur le dessus du plateau (10). Préférentiellement, l'installation comporte une armoire électrique en acier peint, par exemple de marque Eldon, de dimensions de 1200 mm x 1200 mm x 400 mm, laquelle comprend au moins un sectionneur, une alimentation 24 volts, un transformateur 400/230 volts 630 VA et ses protections, sept départs pour les moteurs, une protection pour la pesée, un disjoncteur différentiel, un boîtier autocontrôlé de type Piltz pour l'arrêt d'urgence et ses relais, des voyants et des boutons poussoirs. Dans certains modes de réalisation, la gestion de l'installation est assurée par un automate de type Micrologix 1500.

### Procédé pour la culture ou le phénotypage d'une pluralité de plantes dans un environnement contrôlé

La présente invention est également relative à un procédé pour la culture ou le phénotypage d'une pluralité de plantes dans un environnement contrôlé, dans lequel chacune des plantes à cultiver est supportée par un substrat de culture disposé dans un support mobile (15) à la surface d'un plateau (10), dont la surface est divisée respectivement en :
- une rangée R localisée le long d'un premier bord (11) du plateau (10) et ayant deux extrémités opposées,
- une pluralité de N colonnes adjacentes (30) C1 à CN, perpendiculaires à la rangée R, chacune des colonnes ayant deux extrémités opposées,
   - la première colonne C1 communiquant, à une première de ses extrémités, par une ouverture de dimension suffisante pour le passage des supports mobiles (15), avec une première extrémité de la rangée R, et, à l'autre de ses extrémités, par une ouverture de dimension suffisante pour le passage des supports mobiles (15), avec la colonne adjacente suivante C2,
   - la Nième colonne CN communiquant, à une première de ses extrémités, par une ouverture de dimension suffisante pour le passage des supports mobiles (15), avec l'extrémité opposée de la rangée R, et, à l'autre de ses extrémités, par une ouverture de dimension suffisante pour le passage des supports mobiles (15), avec la colonne adjacente précédente CN-1,
   - chacune des colonnes restantes C2 à CN-1 communiquant,
      - à l'une de ses extrémités, par une ouverture de dimension suffisante pour le passage des supports mobiles (15), avec une colonne adjacente précédente, et
      - à l'autre de ses extrémités, par une ouverture de dimension suffisante pour le passage des supports mobiles (15), avec une colonne adjacente suivante,
chaque support mobile (15) étant apte à prendre successivement toutes les positions possibles sur la surface dudit plateau (10), respectivement :
- une position quelconque R1 à RA dans ladite rangée R localisée le long dudit premier bord (11) du plateau (10), A étant égal à la valeur maximale du nombre de supports mobiles (15) susceptibles d'être contenus dans ladite rangée R,
- une position quelconque CX1 à CXB dans une colonne CX, avec X consistant en un entier allant de 1 à N, N étant un entier pair, et B étant égal à la valeur maximale du nombre de supports mobiles (15) susceptibles d'être contenus dans une colonne CX,
ledit procédé comprenant les étapes consistant à :
a) initialiser un cycle de déplacement des supports mobiles (15) en positionnant ceux-ci sur la surface du plateau (10) de sorte que les supports mobiles (15) sont placés de telle manière à permettre toute translation verticale et/ou toute translation horizontale à l'étape ultérieure,
b) réaliser une étape de translation verticale d'un sous-ensemble des supports mobiles (15) selon l'axe des colonnes C1 à CN, ladite étape comprenant :
   b1) une translation T1 des supports mobiles (15) contenus dans les colonnes de rang pair C2 à CN en direction de la rangée R, et
   b2) une translation T2 des supports mobiles (15) contenus dans les colonnes de rang impair C1 à CN-1 en direction opposée à la direction de translation T1,
   étant entendu que les étapes b1) et b2) peuvent être réalisées simultanément ou séparément, l'ordre dans lequel sont réalisées les étapes b1) et b2) étant indifférent,
c) réaliser une étape de translation horizontale d'un sous-ensemble des supports mobiles (15) selon l'axe de la rangée R, ladite étape comprenant :
   c1) une translation T3 des supports mobiles (15) contenus dans la rangée R dans la direction de l'axe horizontal passant successivement par les colonnes CN à C1,
   c2) une translation T4 des supports mobiles (15) localisés à l'extrémité opposée à la rangée R de chacune des colonnes C1 à CN-1 dans une direction suivant l'axe passant successivement par les colonnes C1 à CN, et
   c3) une translation T5 des supports mobiles (15) localisés à l'autre extrémité de chacune des colonnes C2 à CN-2 dans une direction suivant l'axe passant successivement par les colonnes C1 à CN,
   étant entendu que les étapes c1), c2) et c3) peuvent être réalisées simultanément ou séparément, l'ordre dans lequel sont réalisées les étapes c1), c2) et c3) étant indifférent, étant entendu de plus que les étapes b) et c) sont réalisées séparément, l'ordre dans lequel sont réalisées les étapes b) et c) étant indifférent,
d) répéter les étapes b) et c) un nombre de fois suffisant pour que chacun des supports mobiles (15) ait pris à la fin du dernier cycle de répétition des étapes b) et c) successivement toutes les positions possibles sur la surface dudit plateau (10), de sorte qu'un cycle complet de déplacement des supports mobiles (15) a été réalisé,
e) répéter l'étape d) pendant un nombre de cycles suffisant pour réaliser la culture de la pluralité de plantes.

Le procédé ci-dessus est préférentiellement réalisé avec l'automate ou l'installation précédemment décrits. Les différentes étapes du procédé ci-dessus sont décrites en détail ci-dessous.

### Etape a) d'initialisation du procédé

De manière générale, l'étape a) consiste en une étape d'initialisation du procédé à la fin de laquelle les supports mobiles (15) sont positionnés sur la surface du plateau (10). Préférentiellement, les supports mobiles (15) sont placés à l'étape a) de telle manière à permettre toute translation subséquente, qu'elle soit verticale (étape b)) ou horizontale (étape c)).

La translation opérée à l'étape b) est dite « verticale » en référence au sens de lecture de la figure 1. La translation opérée à l'étape c) est dite « horizontale » en référence au sens de lecture de la figure 1. Il va de soi que la figure 1 représente une vue de dessus de l'automate de l'invention, de sorte que, compte tenu du fait que la surface du plateau (10) est dans la réalité dans un plan horizontal, les translations « verticale » et « horizontale sont, dans la réalité de mise en oeuvre de l'automate, simplement perpendiculaires l'une par rapport à l'autre.

La circulation des supports mobiles (15) sur le plateau (10) est assurée par les moyens de translation précédemment décrits, à savoir d'une part le pousseur gauche (41) et les bielles basses (42) et hautes (43), actionnés simultanément ou séparément, et d'autre part le pousseur droit (51) et les râteaux hauts (52) et bas (53), actionnés simultanément ou séparément. Par translation « verticale », on entend toute translation résultant de la mise en mouvement des moyens de translation (41, 42, 43) des supports mobiles (15). Par translation « horizontale », on entend toute translation résultant de la mise en mouvement des moyens de translation (51, 52, 53) des supports mobiles (15).

Dans certains modes de réalisation du procédé, au moins certains des moyens de translation verticale et des moyens de translation horizontale des supports mobiles (15) peuvent être simultanément mis en mouvement. Cependant, dans la pratique, cela est difficile à mettre en oeuvre car une bonne synchronisation des moyens de translation est complexe à piloter.

De fait, pour une bonne circulation des supports mobiles (15), tous les déplacements selon une direction donnée devront être terminés avant de pouvoir effectuer un quelconque déplacement dans la direction perpendiculaire. Cela signifie qu'avant de mettre en mouvement un moyen de translation verticale, on attendra de préférence que chacun des moyens de translation horizontale ait été actionné, et inversement avant de mettre en mouvement un moyen de translation horizontale, on attendra de préférence que chacun des moyens de translation verticale ait été actionné.

Si les supports mobiles (15) sont positionnés initialement d'une manière quelconque sur la surface du plateau (10) de l'automate, afin de permettre toute translation à l'étape ultérieure, qu'elle soit verticale (étape b)) ou horizontale (étape c)), il faudra disposer de façon adéquate les supports mobiles (15) avant de pouvoir effectuer l'étape ultérieure de translation.

La disposition adéquate des supports mobiles (15) à l'étape a) peut être réalisée manuellement ou en actionnant de manière appropriée les divers moyens de translation (41, 42, 43, 51, 52, 53) décrits précédemment dans la présente description, de préférence manuellement.

On note B la valeur maximale du nombre de supports mobiles (15) susceptibles d'être contenus dans une colonne CX quelconque, X étant un entier compris entre 1 et N. On note A la valeur maximale du nombre de supports mobiles (15) susceptibles d'être contenus dans la rangée R, qui correspond à la rangée (20) de l'automate.

Pour initialiser un cycle de déplacement des supports mobiles (15), dans un mode de réalisation optimal du procédé, il est nécessaire que les supports mobiles (15) soient disposés selon des conditions minimales obligatoires sur la surface du plateau (10) de l'automate.

Afin que toute translation horizontale soit permise, il est nécessaire que la rangée R comprenne au moins un emplacement vide, situé à n'importe quelle position dans ladite rangée R, i.e. que la rangée R comprenne un nombre maximal de supports mobiles (15) égal à A-1, que chaque couple d'emplacements supérieurs pour support mobile (en référence à la figure 1) de deux colonnes adjacentes C1-C2, C3-C4, etc... comprenne au moins un emplacement vide, et que chaque couple d'emplacements inférieurs pour support mobile (en référence à la figure 1) de deux colonnes adjacentes C2-C3, C4-C5, etc... comprenne au moins un emplacement vide. Lorsque les supports mobiles (15) sont positionnés sur la surface du plateau (10) comme décrit ci-dessus à la fin de l'étape a), l'homme du métier comprend aisément que le déplacement des supports mobiles (15) pourra s'effectuer de manière optimale du fait que le mouvement des moyens de translation (51, 52, 53) n'est jamais gêné.

De même, afin que toute translation verticale soit permise, il est nécessaire que chaque colonne C1 à CN comprenne au moins un emplacement vide, situé à n'importe quelle position dans chacune desdites colonnes, la rangée R pouvant en revanche être pleine. Ainsi la rangée R doit comprendre un nombre maximal de supports mobiles (15) égal à A, et chaque colonne doit comprendre un nombre maximal de supports mobiles (15) égal à B-1. Lorsque les supports mobiles (15) sont positionnés sur la surface du plateau (10) comme décrit ci-dessus à la fin de l'étape a), l'homme du métier comprend aisément que le déplacement des supports mobiles (15) pourra s'effectuer de manière optimale du fait que le mouvement des moyens de translation (41, 42, 43) n'est jamais gêné.

Enfin, afin qu'à la fois toute translation horizontale et toute translation verticale soit permise, il est nécessaire de combiner les conditions initiales exposées ci-dessus, relativement au taux de remplissage de la rangée R et des colonnes adjacentes (30) C1 à CN. Lorsque les supports mobiles (15) sont positionnés sur la surface du plateau (10) comme décrit ci-dessus à la fin de l'étape a), l'homme du métier comprend aisément que le déplacement des supports mobiles (15) pourra s'effectuer de manière optimale du fait que le mouvement des moyens de translation (41, 42, 43, 51, 52, 53) n'est jamais gêné.

Une fois les supports mobiles (15) ainsi positionnés, à la fin de l'étape a) d'initialisation, l'automate est prêt à débuter le premier cycle de circulation des supports mobiles (15) le long du circuit en boucle défini précédemment dans la présente description.

Comme cela a été précédemment exposé, le plateau (10) de l'automate peut comporter un nombre de supports mobiles (15) inférieur au nombre maximal de supports mobiles (15) permis, mais il faut cependant toujours veiller à ce que le nombre de supports mobiles (15) présents sur le plateau (10) de l'automate soit suffisant pour que chacun d'entre eux puisse effectuer un cycle complet de déplacement. Le fonctionnement de l'automate est toutefois optimal lorsque le plateau (10) de l'automate comporte le nombre maximal de supports mobiles (15) permis. Il est donc conseillé de placer sur le plateau (10) de l'automate le nombre maximal de supports mobiles (15) permis, et ce même si certains supports mobiles (15) sont alors vides.

De manière générale, la mise en oeuvre combinée, successivement dans le temps, des deux étapes de translation b) et c), que ce soit l'étape b) de translation « verticale » puis l'étape c) de translation « horizontale », ou bien l'étape c) de translation « horizontale » puis l'étape b) de translation « verticale », provoque le déplacement de la totalité des supports mobiles (15) d'un pas. Chaque support mobile (15) passe alors d'une position Z à une position Z, Z+1 ou Z+2, suivant le support mobile (15) considéré et sa localisation par rapport à d'éventuels emplacements vides, Z étant un entier égal à l'ensemble des positions possibles d'un support mobile (15) à la surface du plateau (10), et plus précisément à l'ensemble des positions possibles d'un support mobile (15) le long du circuit en boucle délimité par l'enchaînement de la rangée R puis de la succession des colonnes adjacentes (30) C1 à CN.

### Etape b) de translation verticale du procédé

A l'étape b), on réalise une translation verticale des supports mobiles (15) qui sont déjà engagés, au début de cette étape, dans l'une quelconque des colonnes C1 à CN, ainsi que de celui qui est localisé, au début de cette étape, à l'extrémité de la rangée R adjacente à la colonne C1. Une étape b) de translation verticale permet le déplacement des supports mobiles (15) d'un demi-pas.

Compte tenu de la géométrie de la partie du circuit en boucle qui est délimitée par l'enchaînement de la rangée R et de la succession des colonnes adjacentes C1 à CN, l'avancement des supports mobiles (15) d'une position Z à une position Z ou Z+1 requiert :
- une première translation « verticale », aussi appelée translation « T1 », des supports mobiles (15) contenus dans les colonnes de rang pair C2 à CN, dans le sens allant de l'extrémité de ces colonnes située du côté du bord (13) du plateau (10) vers l'extrémité située du côté du bord (11) du plateau (10), et
- une deuxième translation « verticale », aussi appelée translation « T2 », des supports mobiles (15) contenus dans les colonnes de rang impair C1 à CN-1 et du support mobile situé à l'extrémité de la rangée R adjacente à la colonne C1, dans le sens allant de l'extrémité de ces colonnes située du côté du bord (11) du plateau (10) vers l'extrémité située du côté du bord (13) du plateau (10).

A l'étape b), les translations T1 et T2 peuvent être réalisées simultanément ou séparément dans le temps. Dans les modes de réalisation préférés du procédé, les translations T1 et T2 sont réalisées simultanément, de manière à réduire la durée de l'étape b) de translation verticale.

Par définition, plus la durée de l'étape b) de translation verticale est réduite, plus la vitesse moyenne de translation des supports mobiles (15) le long du circuit en boucle est grande et plus la durée d'un cycle complet de translation d'un support mobile (15) donné est également réduite. Et par définition également, plus la durée d'un cycle complet de translation d'un support mobile (15) est réduite, plus il est possible d'exécuter un nombre important de cycles complets de translation par période de temps donnée, ce qui favorise l'application de conditions moyennes d'environnement homogènes aux plantes supportées par les supports mobiles (15).

Cependant il peut exister un seuil, en terme de nombre de cycles complets de translation par 24 heures, au-delà duquel les différences de résultat ne seront plus détectables. Cela signifie qu'il est possible de réaliser un nombre relativement limité de cycles, pour le même résultat en terme d'homogénéité des conditions de culture des plantes.

Pour l'exécution de l'étape b1) de translation T1, on actionne, de manière simultanée ou séparée dans le temps :
- *les moyens de translation (43)*, ou bielles hautes, qui équipent chacune des colonnes de rang pair C2 à CN, et dont le plan de poussée est translaté selon un axe parallèle à l'axe des colonnes C1 à CN, dans une direction allant du bord (13) vers le bord (11) du plateau (10). La course du mouvement de translation des bielles hautes (43) est adaptée pour provoquer la translation du support mobile (15) localisé devant son plan de poussée, d'une position Z à une position Z+1.

Pour l'exécution de l'étape b2) de translation T2, on actionne, de manière simultanée ou séparée dans le temps, respectivement :
- *le moyen de translation (41),* ou pousseur gauche, localisé à l'extrémité de la rangée R adjacente à la colonne C1, et dont le plan de poussée est translaté selon un axe parallèle à l'axe des colonnes C1 à CN, dans une direction allant du bord (11) vers le bord (13) du plateau (10). La course du mouvement de translation du pousseur gauche (41) est adaptée pour provoquer la translation du support mobile (15) localisé devant son plan de poussée, d'une position Z à une position Z+1.
- *les moyens de translation (42),* ou bielles basses, qui équipent chacune des colonnes de rang impair C3 à CN-1, et dont le plan de poussée est translaté selon un axe parallèle à l'axe des colonnes C1 à CN, dans une direction allant du bord (11) vers le bord (13) du plateau (10). La course du mouvement de translation des bielles basses (42) est adaptée pour provoquer la translation du support mobile (15) localisé devant son plan de poussée, d'une position Z à une position Z+1.

Comme cela a déjà été indiqué, les étapes b1) et b2) peuvent être réalisées simultanément ou de manière séparée dans le temps. Toutefois, les étapes b1) et b2) sont de préférence exécutées simultanément, de manière à réduire la durée totale de l'étape b). Dans les modes de réalisation du procédé dans lequel les étapes b1) et b2) sont réalisées de manière séparée dans le temps, l'ordre d'exécution des étapes b1) et b2) est indifférent.

### Etape c) de translation horizontale du procédé

A l'étape c), on réalise une translation horizontale des supports mobiles (15) qui sont déjà engagés, au début de cette étape, dans la rangée R, à l'extrémité de chacune des colonnes C1 à CN-1 qui est située du côté du bord (13) du plateau (10), et à l'extrémité de chacune des colonnes C2 à CN-2 qui est située du côté du bord (11) du plateau (10). Une étape c) de translation horizontale permet le déplacement des supports mobiles (15) d'un demi-pas.

Compte tenu de la géométrie de la partie du circuit en boucle qui est délimitée par l'enchaînement de la rangée R et de la succession des colonnes adjacentes C1 à CN, l'avancement des supports mobiles (15) d'une position Z à une position Z ou Z+1 requiert :
- une première translation « horizontale », aussi appelée translation « T3 », des supports mobiles (15) contenus dans la rangée R, dans le sens allant de l'extrémité de la rangée R située du côté du bord (14) du plateau (10) vers l'extrémité de la rangée R située du côté du bord (12) du plateau (10),
- une deuxième translation « horizontale », aussi appelée translation « T4 », des supports mobiles (15) contenus dans chacune des colonnes de rang impair C1 à CN-1, dans le sens allant du bord (12) vers le bord (14) du plateau (10), et
- une troisième translation « horizontale », aussi appelée translation « T5 », des supports mobiles (15) contenus dans chacune des colonnes de rang pair C2 à CN-2, dans le sens allant du bord (12) vers le bord (14) du plateau (10).

A l'étape c), les translations T3, T4 et T5 peuvent être réalisées (i) toutes simultanément, (ii) deux étapes simultanément et une troisième étape séparément des deux autres, ou (iii) les trois étapes de manière séparée dans le temps. Dans les modes de réalisation préférés du procédé, les translations T3, T4 et T5 sont réalisées simultanément, de manière à réduire la durée de l'étape c) de translation horizontale.

Par définition, plus la durée de l'étape c) de translation horizontale est réduite, plus la vitesse moyenne de translation des supports mobiles (15) le long du circuit en boucle est grande et plus la durée d'un cycle complet de translation d'un support mobile (15) donné est également réduite. Et par définition également, plus la durée d'un cycle complet de translation d'un support mobile (15) est réduite, plus il est possible d'exécuter un nombre important de cycles complets de translation par période de temps, ce qui favorise l'application de conditions moyennes d'environnement homogènes aux plantes supportées par les supports mobiles (15).

Pour l'exécution de l'étape c1) de translation T3, on actionne :
- *le moyen de translation (51),* ou pousseur droit, qui équipe l'extrémité de la rangée R située du côté du bord (14) du plateau (10), et dont le plan de poussée est translaté selon un axe parallèle à l'axe de la rangée R, dans une direction allant du bord (14) vers le bord (12) du plateau (10). La course du mouvement de translation du pousseur droit (51) est adaptée pour provoquer la translation du support mobile (15) localisé devant son plan de poussée, d'une position Z à une position Z+1.

Pour l'exécution de l'étape c2) de translation T4, on actionne, de manière simultanée ou séparée dans le temps :
- *les moyens de translation (52),* ou râteaux supérieurs, qui équipent l'extrémité de chacune des colonnes de rang impair C1 à CN-1 située du côté du bord (13) du plateau (10), et dont le plan de poussée est translaté selon un axe parallèle à l'axe des colonnes C1 à CN dans une direction allant du bord (12) vers le bord (14) du plateau (10). La course du mouvement de translation des râteaux supérieurs (52) est adaptée pour provoquer la translation du support mobile (15) localisé devant son plan de poussée, d'une position Z à une position Z+1.

Pour l'exécution de l'étape c3) de translation T5, on actionne, de manière simultanée ou séparée dans le temps :
- *les moyens de translation (53),* ou râteaux inférieurs, qui équipent l'extrémité de chacune des colonnes paires C2 à CN-2 située du côté du bord (11) du plateau (10), et dont le plan de poussée est translaté selon un axe parallèle à l'axe des colonnes C1 à CN dans une direction allant du bord (12) vers le bord (14) du plateau (10). La course du mouvement de translation des râteaux inférieurs (53) est adaptée pour provoquer la translation du support mobile (15) localisé devant son plan de poussée, d'une position Z à une position Z+1.

Comme cela a déjà été indiqué, les étapes c1), c2) et c3) peuvent être réalisées (i) toutes simultanément, (ii) deux étapes simultanément et une troisième étape séparément des deux autres, ou (iii) les trois étapes de manière séparée dans le temps. Toutefois, les étapes c1), c2) et c3) sont de préférence exécutées simultanément, de manière à réduire la durée totale de l'étape c). Dans les modes de réalisation du procédé dans lequel les étapes c1), c2) et c3) sont réalisées de manière séparée dans le temps, l'ordre d'exécution des étapes c1), c2) et c3) est indifférent.

Comme cela a déjà été indiqué, les étapes b) et c) sont réalisées de manière séparée dans le temps, l'ordre d'exécution des étapes b) et c) étant indifférent.

### Etape d) du procédé

Comme cela a déjà été indiqué précédemment, l'exécution de la combinaison des étapes b) et c) ci-dessus permet l'avancement d'un pas de la totalité des supports mobiles (15) disposés dans le circuit en boucle à la surface du plateau (10). Chaque support mobile (15) passe alors d'une position de départ Z à une position d'arrivée Z, Z+1 ou Z+2, suivant le support mobile (15) considéré et sa localisation par rapport à d'éventuels emplacements vides, Z étant un entier égal au total des positions possibles des supports mobiles (15) dans ledit circuit en boucle à la surface du plateau (10). Après l'enchaînement d'une étape b) et d'une étape c), le système est prêt à réaliser un nouveau pas.

Comme cela a aussi été précisé, un support mobile (15) a réalisé un cycle complet de translation dans le circuit fermé à la surface du plateau (10) lorsque ledit support mobile (15) a occupé successivement les Z positions possibles, et qu'à la prochaine étape de translation, ledit support mobile (15) prendra à nouveau la position qu'il avait au début de la première exécution de l'étape b) ou c) du procédé de culture ou de phénotypage de l'invention.

Lorsque l'automate est utilisé de manière optimale, c'est-à-dire lorsque le circuit fermé à la surface du plateau (10) comprend le nombre maximal possible de supports mobiles (15) permettant l'exécution du procédé de culture ou de phénotypage, un cycle complet de translation des supports mobiles (15) est réalisé après Z exécutions de la combinaison des étapes b) et c) décrites ci-dessus.

A l'étape d) du procédé, on répète les étapes b) et c) un nombre de fois suffisant pour exécuter un cycle complet de déplacement des supports mobiles (15) le long du circuit en boucle à la surface du plateau (10). Dans le mode de réalisation optimal du procédé, pour lequel le nombre de supports mobile (15) disposés à la surface du plateau (10) est tel que la totalité desdits supports mobiles est translatée à chaque exécution d'une combinaison des étapes b) et c), la combinaison des étapes b) et c) est exécutée Z fois, et l'étape d) est en conséquence exécutée Z-1 fois.

### Etape e) du procédé

A l'étape e) du procédé, on répète l'étape d) le nombre de fois suffisant pour exécuter autant de cycles complets de translation des supports mobiles (15) dans le circuit en boucle à la surface du plateau (10) qu'il est désiré. Ainsi, si l'on désire réaliser Y cycles complets de translation des supports mobiles (15) durant le procédé de culture ou de phénotypage, on effectue Y-1 fois l'étape e).

L'homme du métier aura compris que l'avantage essentiel apporté par le procédé de culture ou de phénotypage de l'invention est l'obtention de conditions d'environnement les plus uniformes possibles pour l'ensemble de la population de plantes cultivées. Les objectifs poursuivis par l'invention sont atteints lorsque, en moyenne dans le temps, chaque plante cultivée a été soumise à des conditions d'environnement, par exemple d'hygrométrie, de température et d'éclairement, identiques ou sensiblement identiques. Ainsi, pour exécuter avec succès le procédé de culture ou de phénotypage de l'invention, il n'est pas obligatoire que les plantes disposées sur les supports mobiles (15) soient en mouvement continu pendant la totalité de la durée dudit procédé. La vitesse de déplacement des supports mobiles (15) à la surface du plateau (10) est choisie par l'utilisateur, en fonction des contraintes ou des consignes de l'essai de culture ou de phénotypage à réaliser.

Le rapport entre (i) la durée des étapes de translation proprement dites des supports mobiles (15) au cours de l'exécution du procédé de culture ou de phénotypage de l'invention et (ii) la durée totale d'exécution du procédé, peut être très variable et choisi par l'utilisateur.

Dans certains modes de réalisation du procédé, dans lesquels on désire exécuter un déplacement continu ou quasi-continu des plantes à la surface du plateau (10), on exécute ledit procédé avec un rapport important entre (i) la durée des étapes de translation proprement dites des supports mobiles (15) au cours de l'exécution du procédé de culture ou de phénotypage de l'invention et (ii) la durée totale d'exécution du procédé. Par exemple, lorsque les étapes b) et c) de translation proprement dites ont une durée allant d'environ 0,5 à environ 2 secondes, on applique un temps de pause ou d'inactivité d'environ la même durée avant de répéter la combinaison des étapes b) et c), c'est-à-dire avant d'exécuter l'étape d) du procédé. Dans ces modes de réalisation, l'application d'une durée réduite du temps de pause entraîne une grande fréquence d'exécution de l'étape d) et un mouvement continu ou quasi-continu des supports mobiles (15) à la surface du plateau (10).

Dans d'autres modes de réalisation du procédé, dans lesquels il n'est pas choisi d'exécuter un déplacement continu ou quasi-continu des plantes à la surface du plateau (10), on exécute ledit procédé avec un rapport réduit entre (i) la durée des étapes de translation proprement dites des supports mobiles (15) au cours de l'exécution du procédé de culture ou de phénotypage de l'invention et (ii) la durée totale d'exécution du procédé. Par exemple, lorsque les étapes b) et c) de translation proprement dites ont une durée allant d'environ 0,5 à environ 2 secondes, on peut appliquer un temps de pause ou d'inactivité d'une durée variable choisie, par exemple allant de 10 secondes à 10 minutes, avant de répéter la combinaison des étapes b) et c), c'est-à-dire avant d'exécuter l'étape d) du procédé. Dans ces modes de réalisation, l'application d'une durée importante du temps de pause entraîne une fréquence réduite d'exécution de l'étape d) et un mouvement moins fluide des supports mobiles (15) à la surface du plateau (10).

Comme cela a été précédemment expliqué, il est important d'assurer aux plantes un apport régulier en eau afin d'assurer leur viabilité, ainsi qu'un apport régulier en engrais afin d'assurer leur croissance. Le procédé comprend donc de préférence une étape additionnelle d'apport en eau et/ou en solution nutritive au substrat de culture supportant une plante disposé dans un support mobile (15) durant au moins un cycle de répétition des étapes b) et c).

Cette étape additionnelle est réalisée à la fin de l'une des étapes b) ou c), suivant à quel niveau le long du parcours des plantes se situent le ou les moyens d'apport en eau ou en solution nutritive nécessaire à la croissance des plantes. Dans le cas de plusieurs moyens de distribution répartis à différents endroits le long du parcours des plantes, il faudra donc veiller à installer ceux-ci de telle façon qu'ils puissent tous assurer leur rôle au même moment du procédé. Il est sinon toujours envisageable de les dissocier au niveau du procédé mais cela complexifiera le procédé et impliquera de modifier le schéma des instructions dans l'ordinateur de supervision.

Comme cela a été précédemment spécifié, cette étape est généralement couplée à des étapes de pesée : l'une, effectuée avant la distribution, permet d'ajuster la quantité d'eau et/ou d'engrais liquide à délivrer à la plante, et l'autre, effectuée par la suite, permet de vérifier la quantité effectivement délivrée.

Comme l'automate est de préférence disposé dans une enceinte de culture de plantes, de même le procédé est de préférence réalisé dans une enceinte de culture de plantes. De préférence, dans ce mode de réalisation du procédé, au moins une condition physique de l'environnement interne de l'enceinte de culture, choisie parmi la valeur d'hygrométrie, la température et l'éclairement, est contrôlée. On peut également envisager de contrôler la pression atmosphérique à l'intérieur de l'enceinte, ou la composition chimique de l'atmosphère interne de l'enceinte, ou encore tout autre paramètre physique susceptible d'influencer la croissance des plantes.

C'est la possibilité de contrôler les paramètres climatiques de l'enceinte de culture dans laquelle se trouvent les plantes, alliée au déplacement des plantes en boucle au sein de cette enceinte de culture, qui permet d'envisager de réaliser dans de bonnes conditions le phénotypage d'une pluralité de plantes : avantageusement, le procédé comprend une étape additionnelle de mesure d'au moins une caractéristique phénotypique d'au moins une plante supportée par un substrat de culture disposé dans un support mobile (15).

De la même façon que la distribution d'eau et/ou d'engrais liquide, la mesure de la ou des caractéristiques phénotypiques doit être effectuée durant au moins un cycle de répétition des étapes b) et c), à la fin de l'une des étapes b) ou c), suivant à quel niveau le long du parcours des plantes se situent le ou les moyens de mesure. Dans le cas de plusieurs moyens de mesure répartis à différents endroits le long du parcours des plantes, il faudra donc veiller à installer ceux-ci de telle façon qu'ils puissent tous assurer leur rôle au même moment du procédé. Il est sinon toujours envisageable de les dissocier au niveau du procédé mais cela complexifiera le procédé et impliquera de modifier le schéma des instructions dans l'ordinateur de supervision.

Avantageusement, l'étape additionnelle de mesure d'au moins une caractéristique phénotypique d'une plante consiste en une étape de mesure de la surface foliaire.

Une étude génétique de bonne qualité nécessite une grande population de plantes. C'est pourquoi l'étape d) est de préférence répétée au moins 100 fois, mieux au moins 500 fois, ce qui signifie la présence d'au moins 100 plantes, mieux d'au moins 500 plantes sur le plateau (10), si toutefois chaque support mobile (15) supporte une plante et son substrat de culture.

Réaliser un seul cycle complet de déplacement des supports mobiles (15) en 24 heures est possible avec l'automate de l'invention. Toutefois, la réalisation d'un seul cycle complet de déplacement des supports mobiles (15) en 24 heures sera généralement insuffisante pour s'affranchir de l'effet des variations des conditions de l'environnement et assurer une bonne reproductibilité des mesures. Plus le nombre de cycles réalisés en 24 heures sera élevé, meilleurs seront les résultats en terme d'homogénéité des conditions de culture. C'est pourquoi, de préférence, la fréquence de l'étape d) est telle que sont réalisés au moins 2 cycles complets de déplacement des supports mobiles (15) par 24 heures. Dans la pratique, avec un automate selon l'invention dans lequel sont disposés 700 supports mobiles (15) avec des plantes, et avec une durée totale de la combinaison des étapes b) et c) d'environ 30 secondes, un cycle complet de translation des supports mobiles (15) à la surface du plateau (10) est réalisé en un peu moins de six heures, ce qui rend possible l'exécution de quatre cycles complets de translation desdits supports mobiles en 24 heures.

Dans le cas où un ou plusieurs autres dispositifs éventuels seraient placés sur le plateau (10) de l'automate ou à sa périphérie, comme par exemple un lecteur de codes à barres, alors il faudrait introduire dans le procédé au moins une étape faisant appel à ce ou à ces dispositifs, de préférence durant au moins un cycle de répétition des étapes b) et c).

L'un des avantages du procédé de l'invention est l'obtention de conditions de culture homogènes, comme illustré ci-après dans l'exemple 3.

Un autre des avantages du procédé de l'invention est l'obtention d'un outil d'analyse génétique. En effet, dans certains modes de réalisation du procédé de l'invention, il est possible de cultiver deux plantes ne différant que par un seul gène, tout le reste de leur génome étant identique. Au cours de la culture, un caractère phénotypique donné, comme par exemple la vitesse de croissance des feuilles, est mesuré. Si les valeurs de mesure sont identiques pour les deux plantes, ce qui signifie que le phénotype ne varie pas, alors le gène en question n'a pas d'influence sur ce caractère. Au contraire, si ces valeurs sont différentes, alors le gène en question est impliqué dans le contrôle de ce caractère. Dans d'autres modes de réalisation du procédé de l'invention, il est également possible de cultiver des plantes sans savoir si elles sont ou non génétiquement identiques. C'est la mesure de ce même caractère phénotypique qui permettra de conclure. Si les plantes ne sont pas génétiquement identiques, c'est que les gènes pour lesquels elles diffèrent, et que l'on pourra identifier, jouent un rôle dans la mise en place de ce caractère. Enfin, le procédé de l'invention permet de cultiver de nombreuses plantes et de répéter les expériences dans des conditions globalement identiques, ce qui permet de cibler non plus un seul gène mais de nombreux gènes, ainsi que des caractères contrôlés non plus par un seul gène mais par de nombreux gènes.

Les caractéristiques et avantages de l'invention ressortiront mieux des exemples qui suivent, donnés à titre illustratif et non limitatif.

### EXEMPLES

### Exemple 1 : Déplacement des supports mobiles dans un mode de réalisation du procédé

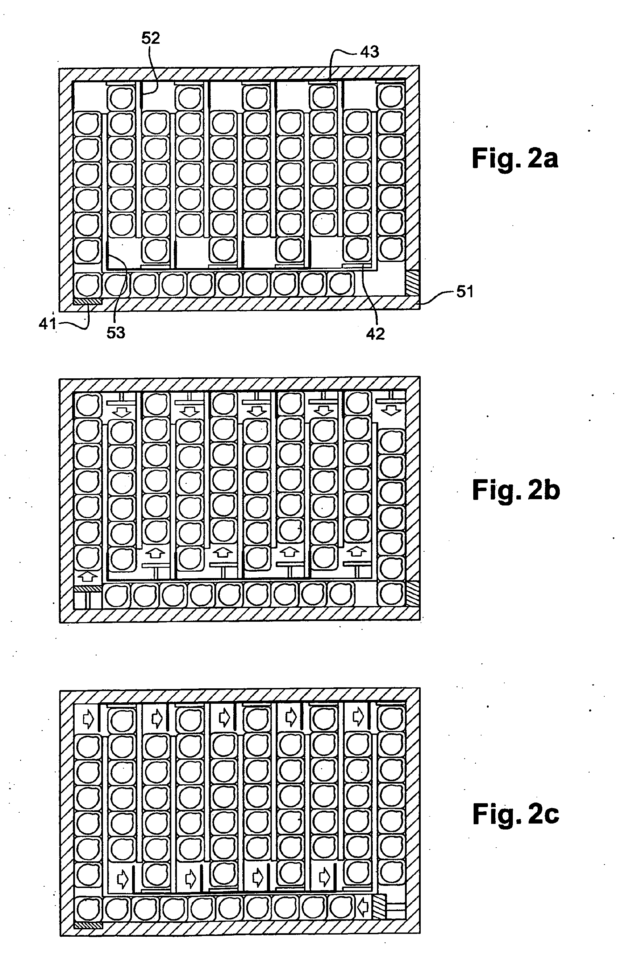

Cet exemple est illustré par les trois schémas en vue de dessus de la figure 2.

La figure 2a) reprend le mode de réalisation particulier de l'automate exposé dans la figure 1. Dans ce mode de réalisation, N est égal à 10, A est égal à 11 et B est égal à 7. Ces paramètres limitent donc la capacité de l'automate au déplacement d'au plus 71 supports mobiles (15), effectivement présents sur le plateau (10) de l'automate. La présente configuration du plateau (10) correspond à l'une des dispositions initiales requises, puisque toute translation subséquente est permise, qu'elle soit verticale ou horizontale, aucun mouvement des moyens de translation ne pouvant être gêné.

Les figures 2b) et 2c) correspondent à l'étape de déplacement des supports mobiles (15) d'un pas, qui consiste à réaliser un enchaînement d'une étape b) et d'une étape c).

L'étape b) est une étape de translation verticale d'un sous-ensemble des supports mobiles (15) selon l'axe des colonnes C1 à CN. Dans le cas présenté à la figure 2b), le pousseur gauche et les bielles hautes et basses sont actionnées simultanément, ce qui signifie que les étapes b1) et b2) sont réalisées simultanément. Une fois leur mouvement effectué, ces moyens de translation reprennent leur position initiale, et le système a alors effectué un demi-pas.

Le déplacement des supports mobiles (15) se poursuit alors par une étape c) de translation horizontale d'un sous-ensemble des supports mobiles (15) selon l'axe de la rangée R. Dans le cas présenté à la figure 2c), le pousseur droit ou « pousseur retour » et les râteaux hauts et bas sont actionnés simultanément, ce qui signifie que les étapes c1), c2) et c3) sont réalisées simultanément. Une fois leur mouvement effectué, ces moyens de translation reprennent leur position initiale, et le système a alors effectué un second demi-pas.

Au cours des déplacements illustrés dans les figures 2b) et 2c), le système a donc effectué un pas, et il est alors prêt à réaliser un nouveau pas, en enchaînant de nouveau une étape b) et une étape c). Dans le cas particulier présenté ici, la configuration des supports mobiles (15) sur le plateau (10) de l'automate à la fin de l'étape c) est identique à celle des supports mobiles (15) au début de l'étape b), si ce n'est que le support numéroté S a été remplacé par le support suivant numéroté S+1. Cela est dû au fait que le nombre de supports mobiles (15) effectivement présents sur le plateau est égal au nombre maximal de supports mobiles que peut comprendre l'automate.

### Exemple 2 : Exemple d'un ensemble d'instructions de commande et de contrôle de l'installation pour la réalisation d'un essai de culture ou de phénotypage de plantes.

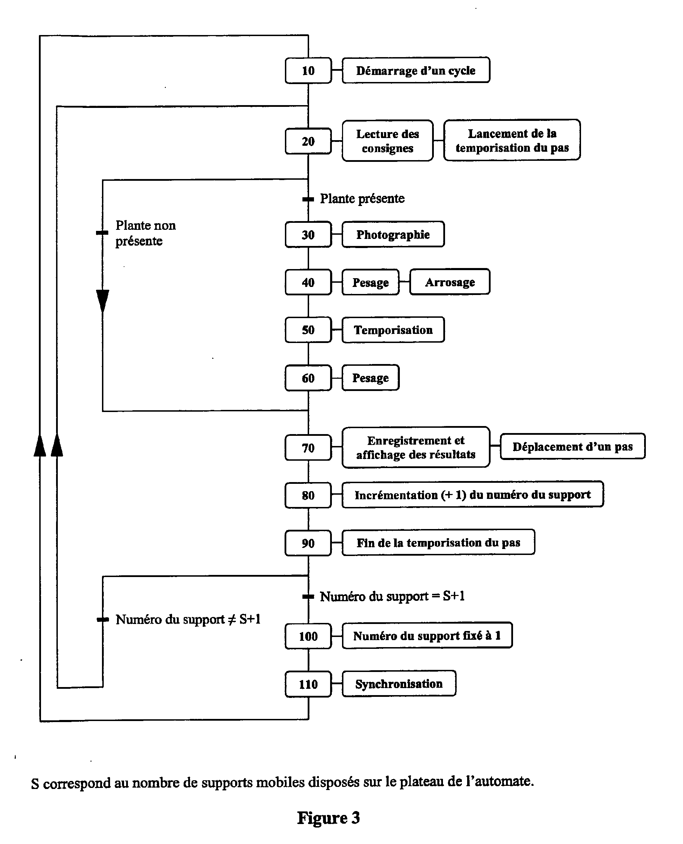

Cet exemple est illustré par le schéma de la figure 3, lequel illustre une séquence d'étapes de contrôle et de commande de l'automate pour la culture ou le phénotypage de plantes qui est chargée dans un moyen de stockage de données du calculateur numérique de l'installation de l'invention.

La séquence d'instructions de contrôle et de commande a été programmée à partir du logiciel RSView®32 commercialisé par la Société Rockwell (Milwaukee, Wisconsin, Etats-Unis).

### Etape 10

Dans le procédé présenté, le cycle de déplacement des supports mobiles (15) débute à l'étape 10 par le démarrage d'un cycle, après que l'utilisateur a positionné les supports mobiles (15) comme requis initialement, ceux-ci étant un nombre égal à S. En d'autres termes, à la fin de l'étape 10, l'étape a) du procédé de l'invention a été réalisée et la configuration de l'automate a été initialisée pour débuter le premier cycle complet de translation des supports mobiles (15) de l'ensemble des cycles qui seront effectués au cours de l'essai de culture ou de phénotypage.

### Etape 20

A l'étape 20, le processeur du calculateur numérique, ou « ordinateur de supervision », lit les consignes de contrôle et de commande et lance également la temporisation du pas.

Les consignes de contrôle et de commande consistent en un ensemble d'instructions requises pour la bonne exécution du procédé de culture ou de phénotypage par les différents moyens équipant l'installation, et qui sont chargées dans la mémoire du calculateur numérique (100).

Parmi ces instructions figurent les correspondances entre le numéro du support et la présence d'une plante, préalablement entrées par l'utilisateur. L'automate sait donc exactement quel support comporte quelle plante.

Si aucune plante n'est présente dans le support mobile considéré, alors le système passe directement à l'étape 70 d'enregistrement, et le cas échéant d'affichage, des résultats. Sinon, le cycle se poursuit par l'étape 30 de photographie.

### Etape 30

A l'étape 30, le processeur du calculateur numérique commande l'acquisition d'une ou de plusieurs images, généralement en vue de dessus, du support mobile n°1 positionné dans le champ de la lentille photographique. Les données numériques de l'image sont (i) soit stockées temporairement dans la mémoire du dispositif d'acquisition d'images, (ii) soit transmises vers un moyen de stockage externe de données, en général un moyen de stockage de données du calculateur numérique.

Dans certains modes de réalisation du procédé, les données de l'image contenues dans la mémoire de l'ordinateur numérique sont traitées par un programme d'analyse d'images contenant les instructions nécessaires à la détection ou au calcul d'une ou de plusieurs valeurs de caractéristiques phénotypiques de la plante correspondante, telle que la hauteur de la plante, la surface foliaire, la forme des tiges ou des feuilles, la couleur des feuilles ou des tiges, etc... Les valeurs caractéristiques de phénotype ainsi calculées peuvent être stockées séparément dans la mémoire du calculateur numérique, en vue de leur utilisation ultérieure, par exemple dans des calculs de comparaison de ces valeurs entre les plantes, à un cycle donné du procédé, ou bien pour la comparaison de ces valeurs pour la même plante mais pour des cycles successifs du procédé.

### Etape 40

L'étape 40 est l'étape de pesage et d'arrosage et/ou d'apport en solution nutritive de la plante, la quantité d'eau et/ou de solution nutritive délivrée à la plante étant ajustée par les commandes du calculateur numérique, en fonction du poids du support mobile mesuré et des valeurs de consigne stockées dans la mémoire du calculateur numérique.

### Etape 50

L'étape 50 consiste en une étape dite de « temporisation » durant lequel le système ne réalise aucune opération. Cette étape, généralement très courte, permet de stabiliser le moyen (110) de pesée des supports mobiles (15) après l'arrosage.

### Etape 60

Après la temporisation de l'étape 50, due au temps nécessaire à l'arrosage, le support mobile est de nouveau pesé à l'étape 60. Il s'agit d'une vérification que la quantité d'eau et/ou de solution nutritive effectivement délivrée à la plante correspond aux valeurs de consigne prédéterminées.

### Etapes 70 et 80

L'étape 70 consiste en une étape de stockage d'information dans la mémoire du calculateur numérique et de déplacement d'un pas.

Dans le cas d'un support mobile ne comportant pas de plante, il est simplement procédé à l'étape 70 à l'enregistrement, dans la mémoire du calculateur numérique, de l'information d'absence de plante.

En revanche, dans le cas d'un support mobile comportant une plante, les étapes 30 à 60 ont été effectuées. Il a donc été préalablement procédé au pesage et à la délivrance de l'eau et/ou de la solution nutritive. Dans ce cas, les informations de pesage, avant et après apport de l'eau et/ou de la solution nutritive, ainsi que, le cas échéant, les informations de fonctionnement délivrées par la ou les pompes actionnées, sont stockées dans la mémoire du calculateur numérique.

Dans certains modes de réalisation, au moins certaines des informations ci-dessus sont affichées, par exemple sur l'écran équipant l'ordinateur numérique, ou bien sur un autre dispositif d'affichage dont le système peut être équipé.

Pendant l'enregistrement et l'affichage des résultats, les supports mobiles (15) sont déplacés d'un pas, et le numéro du support est alors incrémenté à l'étape 80, passant désormais à 2.

### Etapes 90 à 110

L'étape 90 correspond à la fin de la temporisation du pas. Cette étape permet de caler la période du pas de façon à ce que les supports mobiles (15) accomplissent un cycle complet de déplacement des supports mobiles (15) dans le temps imparti.

Le numéro du support mobile n°2 étant différent de S+1, le système retourne à l'étape 20 et reprend en boucle, pour tous les supports mobiles successifs, la procédure précédemment décrite pour le support mobile n°1.

Lorsqu'à la fin de l'étape 80, le numéro du support est égal à S+1, c'est qu'un cycle complet de déplacement des supports mobiles a été réalisé, et, à l'étape 100, on fixe alors de nouveau à 1 le numéro du support mobile numéroté S+1.

Après une étape 110 de synchronisation avec le top horaire, un nouveau cycle démarre, au moment voulu, à l'étape 10.

### Exemple 3 : Résultats obtenus par le procédé de l'invention

Cet exemple est illustré par les deux graphiques de la figure 4 (figures 4A et 4B), qui illustrent tous deux les pertes de poids cumulées (en grammes) aux jours J1 à J4 pour chaque motte parmi 735, soumises soit à un soit à six cycles de déplacement de 4 heures par jour.

L'exemple 3 est également illustré par les deux graphiques de la figure 5, qui présentent les courbes de pertes de poids après 24 heures (en grammes par motte) pour un ensemble de 735 mottes soumises soit à un (pots fixes) soit à six (pots en rotation) cycles de déplacement de 4 heures par jour.

L'expérience est réalisée dans un environnement contrôlé, dans une enceinte de culture de plantes.

Dans cet exemple, le procédé suivi est similaire au procédé décrit ci-dessus à l'exemple 2, si ce n'est que l'étape d'arrosage n'a pas eu lieu à l'étape 30.

Le mode de réalisation du procédé dans lequel on réalise six cycles complets de déplacement des supports mobiles par jour est l'un des modes optimaux de réalisation de l'invention, au cours duquel les plantes circulent sans arrêt significatif sur le plateau (10) de l'automate disposé dans une enceinte de culture. En revanche, cela n'est plus vrai dans le cas d'un seul cycle de déplacement de 4 heures par jour, où les plantes restent immobiles à une place précise sur le plateau (10) de l'automate pendant 20 heures, et ne circulent que pendant 4 heures. Ce cas de figure permet de juger l'efficacité du procédé de l'invention, en se focalisant sur les pertes hydriques des mottes disposées sur le plateau.

Dans le cas d'un seul cycle de déplacement de 4 heures par jour :
- sur la figure 4A, on peut observer une grande variation des pertes de poids mesurées entre les différentes mottes, la différence de perte de poids entre les supports atteignant jusqu'à 5 g au jour J1, puis jusqu'à 10 g aux jours J2 à J4, et ce malgré la disposition de l'automate dans une enceinte de culture dont les paramètres physiques tels que l'éclairement, la valeur d'hygrométrie et la température sont contrôlés ;
- sur la figure 5 (cas des pots fixes), on peut également observer une grande hétérogénéité des pertes de poids en 24 heures selon les mottes, celles-ci variant inégalement entre 5 et 11 g/motte.

Par conséquent, suivant leur placement initial sur le plateau (10), les plantes sont soumises à des conditions climatiques différentes, responsables de différences de perte hydrique inacceptables pour une étude phénotypique.

En revanche, dans le cas de six cycles de déplacement de 4 heures par jour :
- sur la figure 4B, les pertes de poids mesurées sont beaucoup plus homogènes entre les différentes mottes ;
- sur la figure 5 (cas des pots en rotation), les pertes de poids des mottes en 24 heures sont beaucoup plus homogènes, celles-ci adoptant une répartition de type gaussienne centrée autour d'environ 7,5 g/motte.

Visualisées de manière graphique, les différences de résultats entre les deux expériences sont particulièrement marquées, aussi bien sur la figure 4 que sur la figure 5.

## Revendications

1. Automate utilisable pour la culture ou le phénotypage d'une pluralité de plantes dans un environnement contrôlé caractérisé en que l'automate comprend un plateau (10) sur lequel est disposée une pluralité de supports mobiles (15) pour substrat de culture, lesdits supports mobiles (15) étant aptes à prendre successivement toutes les positions possibles sur la surface dudit plateau (10), ledit automate comprenant :
(a) un plateau (10) délimité respectivement par quatre côtés à bord surélevé, respectivement un côté inférieur à bord (11), un côté latéral gauche à bord (12), un côté supérieur à bord (13), et un côté latéral droit à bord (14), et dont la surface comprend :
- une rangée (20) délimitée respectivement par le bord (11) surélevé du plateau et un guide (21) parallèle audit bord (11), les extrémités du guide (21) étant distantes des bords (12) et (14) du plateau (10) d'une distance suffisante pour permettre de chaque côté le passage d'un support mobile (15),
- une pluralité de N colonnes adjacentes (30) C1 à CN perpendiculaires à la rangée (20) et délimitées par les deux bords surélevés (12, 14) des deux côtés opposés du plateau (10) perpendiculaires au premier côté (11) et par une pluralité de N-1 guides (31, 32), la pluralité de guides (31, 32) comprenant :
- un premier groupe de (N/2) guides (31) dans lequel chaque guide (31) comprend deux extrémités (311, 312), l'une (311) étant en contact avec le guide (21), l'autre (312) étant distante du bord (13) du plateau (10) d'une distance suffisante pour permettre le passage d'un support mobile (15), et
- un deuxième groupe de (N/2)-1 guides (32) dans lequel chaque guide (32), intercalé entre deux guides successifs du premier groupe (31), comprend deux extrémités (321, 322), l'une (321) étant en contact avec le bord (13) du côté du plateau (10) opposé à la rangée (20), l'autre (322) étant distante du guide (21) parallèle à la rangée (20) d'une distance suffisante pour permettre le passage d'un support mobile (15), et
- N est un nombre pair,
(b) une pluralité de supports mobiles (15) disposés sur la surface du plateau (10),
(c) des moyens de translation des supports mobiles (15) selon un axe parallèle aux guides (31, 32), respectivement :
- un premier moyen (41), localisé au repos à l'extrémité du bord (11) qui est en contact avec le bord (12) du plateau (10), pour la translation des supports mobiles (15) dans une direction allant du bord (11) vers le bord (13) du plateau (10), le long de la colonne C1 délimitée par le bord (12) et le guide (31) adjacent,
- une première série de moyens (42), pour la translation des supports mobiles (15) dans une direction allant du guide (21) parallèle au bord (11) vers le bord (13) du plateau (10), le long de chacune des colonnes de rang impair C3 à CN-1, et
- une deuxième série de moyens (43), pour la translation des supports mobiles (15) dans une direction allant du bord (13) vers le bord (11) du plateau (10), le long de chacune des colonnes de rang pair C2 à CN, et
(d) des moyens de translation des supports mobiles (15) selon un axe parallèle à la rangée (20), respectivement :
- un premier moyen (51), localisé au repos à l'extrémité du bord (14) qui est en contact avec le bord (11) du plateau (10), pour la translation des supports mobiles (15) dans une direction allant du bord (14) vers le bord (12) du plateau (10), le long de la rangée (20) délimitée par le bord (11) et le guide (21) adjacent,
- une première série de moyens (52) pour la translation des supports mobiles (15) localisés du côté du bord (13) à l'extrémité de chacune des colonnes de rang impair C1 à CN-1, vers l'extrémité de chacune des colonnes de rang pair adjacente C2 à CN, et
- une seconde série de moyens (53) pour la translation des supports mobiles (15) localisés du côté du guide (21) parallèle au bord (11) à l'extrémité de chacune des colonnes de rang pair C2 à CN-2, vers l'extrémité de chacune des colonnes de rang impair adjacente C3 à CN-1.

2. Automate selon la revendication 1, **caractérisé en ce qu'**au moins 100, mieux au moins 500, support mobiles (15) sont disposés sur la surface du plateau (10).

3. Automate selon la revendication 1 ou 2, **caractérisé en ce que** des substrats de culture supportant des plantes sont disposés dans au moins une partie des supports mobiles (15).

4. Automate selon l'une quelconque des revendications précédentes, **caractérisé en ce qu'**il est équipé d'au moins un moyen de pesée d'un support mobile (15).

5. Automate selon l'une quelconque des revendications précédentes, **caractérisé en ce qu'**il est équipé d'au moins un moyen d'apport en eau ou en solution nutritive nécessaire à la croissance des plantes aux substrats de culture supportant les plantes disposés dans des supports mobiles (15).

6. Automate selon la revendication 5, **caractérisé en ce que** ledit moyen d'apport en eau ou en solution nutritive nécessaire à la croissance des plantes est localisé à l'aplomb d'un moyen de pesée des supports mobiles (15).

7. Automate selon l'une quelconque des revendications précédentes, **caractérisé en ce qu'**il est équipé d'au moins un moyen de mesure d'une caractéristique phénotypique d'une plante.

8. Automate selon la revendication 4, **caractérisé en ce que** ledit moyen de mesure consiste en un dispositif d'acquisition d'images.

9. Installation utilisable pour la culture ou le phénotypage d'une pluralité de plantes dans un environnement contrôlé, comprenant :
- un automate selon l'une quelconque des revendications 1 à 8, et
- au moins un moyen de contrôle et de commande des moyens de translation des supports mobiles (15).

10. Installation selon la revendication 9, **caractérisée en ce que** :
- l'automate est équipé d'au moins un moyen de pesée des supports mobiles (15), et d'au moins un moyen d'apport en eau ou en solution nutritive nécessaire à la croissance des plantes, localisé à l'aplomb d'un moyen de pesée des supports mobiles (15), et
- ladite installation comprend au moins un moyen de contrôle et de commande relié audit moyen de pesée et au moins un moyen de contrôle et de commande relié audit moyen d'apport en eau ou en solution nutritive nécessaire à la croissance des plantes, permettant d'ajuster la quantité d'eau et/ou de solution nutritive nécessaire à la croissance des plantes délivrée en fonction du poids du support mobile (15) mesuré.

11. Installation selon la revendication 9 ou 10, **caractérisée en ce que** :
- l'automate est équipé d'au moins un moyen de mesure d'une caractéristique phénotypique d'une plante, et
- ladite installation comprend au moins un moyen de contrôle et de commande dudit ou desdits moyens de mesure et au moins un moyen de stockage des données générées par ledit ou lesdits moyens de mesure.

12. Installation selon l'une quelconque des revendications 9 à 11, **caractérisée en ce que** :
- l'automate est disposé dans une enceinte de culture de plantes, et
- ladite installation comprend au moins un moyen de contrôle et de commande d'au moins une condition physique de l'environnement dans lequel est disposé l'automate, choisie parmi la valeur d'hygrométrie, l'éclairement et la température.

13. Procédé pour la culture ou le phénotypage d'une pluralité de plantes dans un environnement contrôlé, dans lequel chacune des plantes à cultiver est supportée par un substrat de culture disposé dans un support mobile (15) à la surface d'un plateau (10), dont la surface est divisée respectivement en :
- une rangée R localisée le long d'un premier bord (11) du plateau (10) et ayant deux extrémités opposées,
- une pluralité de N colonnes adjacentes (30) C1 à CN, perpendiculaires à la rangée R, chacune des colonnes ayant deux extrémités opposées,
- la première colonne C1 communiquant, à une première de ses extrémités, par une ouverture de dimension suffisante pour le passage des supports mobiles (15), avec une première extrémité de la rangée R, et, à l'autre de ses extrémités, par une ouverture de dimension suffisante pour le passage des supports mobiles (15), avec la colonne adjacente suivante C2,
- la Nième colonne CN communiquant, à une première de ses extrémités, par une ouverture de dimension suffisante pour le passage des supports mobiles (15), avec l'extrémité opposée de la rangée R, et, à l'autre de ses extrémités, par une ouverture de dimension suffisante pour le passage des supports mobiles (15), avec la colonne adjacente précédente CN-1,
- chacune des colonnes restantes C2 à CN-1 communiquant,
- à l'une de ses extrémités, par une ouverture de dimension suffisante pour le passage des supports mobiles (15), avec une colonne adjacente précédente, et
- à l'autre de ses extrémités, par une ouverture de dimension suffisante pour le passage des supports mobiles (15), avec une colonne adjacente suivante,
chaque support mobile (15) étant apte à prendre successivement toutes les positions possibles sur la surface dudit plateau (10), respectivement :
- une position quelconque R1 à RA dans ladite rangée R localisée le long dudit premier bord (11) du plateau (10), A étant égal à la valeur maximale du nombre de supports mobiles (15) susceptibles d'être contenus dans ladite rangée R,
- une position quelconque CX1 à CXB dans une colonne CX, avec X consistant en un entier allant de 1 à N, N étant un entier pair, et B étant égal à la valeur maximale du nombre de supports mobiles (15) susceptibles d'être contenus dans une colonne CX,
ledit procédé comprenant les étapes consistant à :
a) initialiser un cycle de déplacement des supports mobiles (15) en positionnant ceux-ci sur la surface du plateau (10) de sorte que les supports mobiles (15) sont placés de telle manière à permettre toute translation verticale et/ou toute translation horizontale à l'étape ultérieure,
b) réaliser une étape de translation verticale d'un sous-ensemble des supports mobiles (15) selon l'axe des colonnes C1 à CN, ladite étape comprenant :
b1) une translation T1 des supports mobiles (15) contenus dans les colonnes de rang pair C2 à CN en direction de la rangée R, et
b2) une translation T2 des supports mobiles (15) contenus dans les colonnes de rang impair C1 à CN-1 en direction opposée à la direction de translation T1,
étant entendu que les étapes b1) et b2) peuvent être réalisées simultanément ou séparément, l'ordre dans lequel sont réalisées les étapes b1) et b2) étant indifférent,
c) réaliser une étape de translation horizontale d'un sous-ensemble des supports mobiles (15) selon l'axe de la rangée R, ladite étape comprenant :
c1) une translation T3 des supports mobiles (15) contenus dans la rangée R dans la direction de l'axe horizontal passant successivement par les colonnes CN à C1,
c2) une translation T4 des supports mobiles (15) localisés à l'extrémité opposée à la rangée R de chacune des colonnes C1 à CN-1 dans une direction suivant l'axe passant successivement par les colonnes C1 à CN, et
c3) une translation T5 des supports mobiles (15) localisés à l'autre extrémité de chacune des colonnes C2 à CN-2 dans une direction suivant l'axe passant successivement par les colonnes C1 à CN,
étant entendu que les étapes c1), c2) et c3) peuvent être réalisées simultanément ou séparément, l'ordre dans lequel sont réalisées les étapes c1), c2) et c3) étant indifférent, étant entendu de plus que les étapes b) et c) sont réalisées séparément, l'ordre dans lequel sont réalisées les étapes b) et c) étant indifférent,
d) répéter les étapes b) et c) un nombre de fois suffisant pour que chacun des supports mobiles (15) ait pris à la fin du dernier cycle de répétition des étapes b) et c) successivement toutes les positions possibles sur la surface dudit plateau (10), de sorte qu'un cycle complet de déplacement des supports mobiles (15) a été réalisé,
e) répéter l'étape d) pendant un nombre de cycles suffisant pour réaliser la culture de la pluralité de plantes.

14. Procédé selon la revendication 13, **caractérisé en ce qu'**il comprend une étape additionnelle d'apport en eau et/ou en solution nutritive nécessaire à la croissance des plantes au substrat de culture supportant une plante disposé dans un support mobile (15) durant au moins un cycle de répétition des étapes b) et c), ladite étape additionnelle étant réalisée à la fin de l'une des étapes b) ou c).

15. Procédé selon la revendication 13 ou 14, **caractérisé en ce qu'**il est réalisé dans une enceinte de culture de plantes.

16. Procédé selon l'une quelconque des revendications 13 à 15, **caractérisé en ce qu'**au moins une condition physique de l'environnement interne de l'enceinte de culture, choisie parmi la valeur d'hygrométrie, la température et l'éclairement, est contrôlée.

17. Procédé selon l'une quelconque des revendications 13 à 16, **caractérisé en ce qu'**il comprend une étape additionnelle de mesure d'au moins une caractéristique phénotypique d'au moins une plante supportée par un substrat de culture disposé dans un support mobile (15) durant au moins un cycle de répétition des étapes b) et c), ladite étape additionnelle étant réalisée à la fin de l'une des étapes b) ou c).

18. Procédé selon la revendication 17, **caractérisé en ce que** l'étape additionnelle de mesure d'au moins une caractéristique phénotypique d'une plante consiste en une étape de mesure de la surface foliaire.

19. Procédé selon l'une quelconque des revendications 13 à 18, **caractérisé en ce que** l'étape d) est répétée au moins 100 fois, mieux au moins 500 fois.

20. Procédé selon l'une quelconque des revendications 13 à 19, **caractérisé en ce que** la fréquence de l'étape d) est telle que sont réalisés au moins 2 cycles complets de déplacement des supports mobiles (15) par 24 heures.

## Patentansprüche

1. Automat, verwendbar für die Kultur oder Phänotypisierung einer Vielzahl von Pflanzen in einer kontrollierten Umgebung, **dadurch gekennzeichnet, dass** der Automat eine Plattform (10) umfasst, auf der eine Vielzahl von beweglichen Trägern (15) für Kultursubstrat angeordnet sind, wobei die beweglichen Träger (15) nacheinander alle möglichen Positionen auf der Oberfläche der Plattform (10) einnehmen können, wobei der Automat Folgendes umfasst:
(a) eine Plattform (10), die jeweils durch vier Seiten mit erhöhtem Rand begrenzt ist, und zwar eine untere Randseite (11), eine linke seitliche Randseite (12), eine obere Randseite (13) und eine rechte seitliche Randseite (14), und deren Oberfläche Folgendes umfasst:
- eine Reihe (20), die jeweils durch den erhöhten Rand (11) der Plattform und eine Führung (21) parallel zu dem Rand (11) begrenzt ist, wobei die Enden der Führung (21) ausreichend weit von den Rändern (12) und (14) der Plattform (10) entfernt sind, dass ein beweglicher Träger (15) von jeder Seite her vorbeilaufen kann;
- eine Vielzahl von N benachbarten Spalten (30) C1 bis CN, die senkrecht zur Reihe (20) stehen und durch die beiden erhöhten Ränder (12, 14) der beiden einander gegenüberliegenden Seiten der Plattform (10), die senkrecht zur ersten Seite (11) stehen, und durch eine Vielzahl von N-1 Führungen (31, 32) begrenzt sind, wobei die Vielzahl von Führungen (31, 32) Folgendes umfasst:
- eine erste Gruppe von (N/2) Führungen (31), wobei jede Führung (31) zwei Enden (311, 312) umfasst, wobei sich das eine (311) in Kontakt mit der Führung (21) befindet und das andere (312) ausreichend weit vom Rand (13) der Plattform (10) entfernt ist, dass ein beweglicher Träger (15) vorbeilaufen kann; und
- eine zweite Gruppe von (N/2)-1 Führungen (32), wobei jede Führung (32), die zwischen zwei aufeinanderfolgenden Führungen der ersten Gruppe (31) verläuft, zwei Enden (321, 322) umfasst, wobei sich das eine (321) in Kontakt mit dem Rand (13) der Plattform (10), die der Reihe (20) gegenüberliegt, befindet und das andere (322) ausreichend weit von der Führung (21), die parallel zur Reihe (20) verläuft, entfernt ist, dass ein beweglicher Träger (15) vorbeilaufen kann; und
- N eine gerade Zahl ist;
(b) eine Vielzahl von beweglichen Trägern (15), die sich auf der Oberfläche der Plattform (10) befinden;
(c) Einrichtungen zur Verschiebung der beweglichen Träger (15) entlang einer Achse parallel zu den Führungen (31, 32), und zwar:
- eine erste Einrichtung (41), die sich in der Ruhestellung am Ende des Rands (11), der mit dem Rand (12) der Plattform (10) in Kontakt steht, befindet, zur Verschiebung der beweglichen Träger (15) in einer Richtung, die vom Rand (11) zum Rand (13) der Plattform (10) entlang der Spalte C1, die vom Rand (12) und der benachbarten Führung (31) begrenzt ist, verläuft;
- eine erste Folge von Einrichtungen (42) zur Verschiebung der beweglichen Träger (15) in einer Richtung, die von der Führung (21) parallel zum Rand (11) zum Rand (13) der Plattform (10) entlang jeder der ungeradzahligen Spalten C3 bis CN-1 verläuft; und
- eine zweite Folge von Einrichtungen (43) zur Verschiebung der beweglichen Träger (15) in einer Richtung, die vom Rand (13) zum Rand (11) der Plattform (10) entlang jeder der geradzahligen Spalten C2 bis CN verläuft; und
(d) Einrichtungen zur Verschiebung der beweglichen Träger (15) entlang einer Achse parallel zur Reihe (20), und zwar:
- eine erste Einrichtung (51), die sich in der Ruhestellung am Ende des Rands (14), der mit dem Rand (11) der Plattform (10) in Kontakt steht, befindet, zur Verschiebung der beweglichen Träger (15) in einer Richtung, die vom Rand (14) zum Rand (12) der Plattform (10) entlang der Reihe (20), die vom Rand (11) und der benachbarten Führung (21) begrenzt ist, verläuft;
- eine erste Folge von Einrichtungen (52) zur Verschiebung der beweglichen Träger (15), die sich auf der Seite des Randes (13) am Ende der jeweiligen ungeradzahligen Spalten C1 bis CN-1 befinden, zum Ende der jeweiligen benachbarten geradzahligen Spalte C2 bis CN; und
- eine zweite Folge von Einrichtungen (53) zur Verschiebung der beweglichen Träger (15), die sich auf der Seite der Führung (21) parallel zu Rand (11) am Ende der jeweiligen geradzahligen Spalten C2 bis CN-2 befinden, zum Ende der jeweiligen benachbarten ungeradzahligen Spalte C3 bis CN-1.

2. Automat gemäß Anspruch 1, **dadurch gekennzeichnet, dass** sich wenigstens 100, vorzugsweise wenigstens 500, bewegliche Träger (15) auf der Oberfläche der Plattform (10) befinden.

3. Automat gemäß Anspruch 1 oder 2, **dadurch gekennzeichnet, dass** sich Kultursubstrate, die Pflanzen tragen, in wenigstens einem Teil der beweglichen Träger (15) befinden.

4. Automat gemäß einem der vorstehenden Ansprüche, **dadurch gekennzeichnet, dass** er mit wenigstens einer Einrichtung zum Wiegen eines beweglichen Trägers (15) ausgestattet ist.

5. Automat gemäß einem der vorstehenden Ansprüche, **dadurch gekennzeichnet, dass** er mit wenigstens einer Einrichtung zur Zufuhr von Wasser oder Nährlösung, die für das Wachstum der Pflanzen notwendig sind, zu den Kultursubstraten, die die Pflanzen, welche sich in beweglichen Trägern (15) befinden, tragen, ausgestattet ist.

6. Automat gemäß Anspruch 5, **dadurch gekennzeichnet, dass** sich die Einrichtung zur Zufuhr von Wasser oder Nährlösung, die für das Wachstum der Pflanzen notwendig sind, senkrecht zu einer Einrichtung zum Wiegen der beweglichen Träger (15) befindet.

7. Automat gemäß einem der vorstehenden Ansprüche, **dadurch gekennzeichnet, dass** er mit wenigstens einer Einrichtung zur Messung eines phänotypischen Merkmals einer Pflanze ausgestattet ist.

8. Automat gemäß Anspruch 4, **dadurch gekennzeichnet, dass** die Messeinrichtung aus einer Vorrichtung zur Bilderfassung besteht.

9. Anlage, die für die Kultur oder Phänotypisierung einer Vielzahl von Pflanzen in einer kontrollierten Umgebung verwendet werden kann, umfassend:
- einen Automaten gemäß einem der Ansprüche 1 bis 8; und
- wenigstens eine Einrichtung zur Kontrolle und Steuerung der Einrichtungen zur Verschiebung der beweglichen Träger (15).

10. Anlage gemäß Anspruch 9, **dadurch gekennzeichnet, dass**:
- der Automat mit wenigstens einer Einrichtung zum Wiegen der beweglichen Träger (15) und mit wenigstens einer Einrichtung zur Zufuhr von Wasser oder Nährlösung, die für das Wachstum der Pflanzen notwendig sind, welche sich senkrecht zu einer Einrichtung zum Wiegen der beweglichen Träger (15) befindet, ausgestattet ist; und
- die Anlage wenigstens eine Einrichtung zur Kontrolle und Steuerung, die an die Wägeeinrichtung angeschlossen ist, und wenigstens eine Einrichtung zur Kontrolle und Steuerung, die an die Einrichtung zur Zufuhr von Wasser oder Nährlösung, die für das Wachstum der Pflanzen notwendig sind, angeschlossen ist, umfasst, so dass die abgegebene Menge an Wasser und/oder an Nährlösung, die für das Wachstum der Pflanzen notwendig sind, in Abhängigkeit vom gemessenen Gewicht des beweglichen Trägers (15) eingestellt werden kann.

11. Anlage gemäß Anspruch 9 oder 10, **dadurch gekennzeichnet, dass**:
- der Automat mit wenigstens einer Einrichtung zur Messung eines phänotypischen Merkmals einer Pflanze ausgestattet ist; und
- die Anlage wenigstens eine Einrichtung zur Kontrolle und Steuerung der Messeinrichtung oder -einrichtungen und wenigstens eine Einrichtung zur Speicherung der von der oder den Messeinrichtungen erzeugten Daten umfasst.

12. Anlage gemäß einem der Ansprüche 9 bis 11, **dadurch gekennzeichnet, dass**:
- sich der Automat in einer Pflanzenkulturkammer befindet; und
- die Anlage wenigstens eine Einrichtung zur Kontrolle und Steuerung wenigstens einer physikalischen Bedingung der Umgebung, in der sich der Automat befindet, welche aus Luftfeuchtigkeit, Helligkeit und Temperatur ausgewählt ist, umfasst.

13. Verfahren zur Kultur oder Phänotypisierung einer Vielzahl von Pflanzen in einer kontrollierten Umgebung, wobei jede der zu kultivierenden Pflanzen durch ein Kultursubstrat getragen wird, das sich in einem beweglichen Träger (15) auf der Oberfläche einer Plattform (10) befindet, deren Oberfläche eingeteilt ist in:
- eine Reihe R, die entlang eines ersten Randes (11) der Plattform (10) verläuft und zwei entgegengesetzte Enden aufweist;
- eine Vielzahl von N benachbarten Spalten (30) C1 bis CN, die senkrecht zur Reihe R stehen, wobei jede der Spalten zwei entgegengesetzte Enden aufweist;
- wobei die erste Spalte C1 an einem ersten ihrer Enden über eine Öffnung ausreichender Abmessung, dass bewegliche Träger (15) hindurchtreten können, mit einem ersten Ende der Reihe R und am anderen ihrer Enden über eine Öffnung ausreichender Abmessung, dass bewegliche Träger (15) hindurchtreten können, mit der folgenden benachbarten Spalte C2 verbunden ist;
- wobei die Nte Spalte CN an einem ersten ihrer Enden über eine Öffnung ausreichender Abmessung, dass bewegliche Träger (15) hindurchtreten können, mit dem entgegengesetzten Ende der Reihe R und am anderen ihrer Enden über eine Öffnung ausreichender Abmessung, dass bewegliche Träger (15) hindurchtreten können, mit der vorangehenden benachbarten Spalte CN-1 verbunden ist;
- wobei jede der übrigen Spalten C2 bis CN-1
- an einem ihrer Enden über eine Öffnung ausreichender Abmessung, dass bewegliche Träger (15) hindurchtreten können, mit einer vorangehenden benachbarten Spalte verbunden ist; und
- am anderen ihrer Enden über eine Öffnung ausreichender Abmessung, dass bewegliche Träger (15) hindurchtreten können, mit einer folgenden benachbarten Spalte verbunden ist;
wobei jeder bewegliche Träger (15) nacheinander alle möglichen Positionen auf der Oberfläche der Plattform (10) einnehmen kann, und zwar:
- eine beliebige Position R1 bis RA in der Reihe R, die entlang des ersten Randes (11) der Plattform (10) verläuft, wobei A gleich dem maximalen Wert der Anzahl der beweglichen Träger (15) ist, die in der Reihe R enthalten sein können;
- eine beliebige Position CX1 bis CXB in einer Spalte CX, wobei X aus einer ganzen Zahl von 1 bis N besteht, wobei N eine gerade ganze Zahl ist und B gleich dem maximalen Wert der Anzahl der beweglichen Träger (15) ist, die in einer Spalte CX enthalten sein können;
wobei das Verfahren die Schritte umfasst, die aus folgenden bestehen:
a) Einleiten eines Zyklus der Verschiebung der beweglichen Träger (15), indem man diese so auf der Oberfläche der Plattform (10) positioniert, dass die beweglichen Träger (15) so platziert werden, dass im späteren Schritt jede vertikale Verschiebung und/oder jede horizontale Verschiebung möglich ist;
b) Durchführen eines Schritts der vertikalen Verschiebung einer Teilmenge der beweglichen Träger (15) entlang der Achse der Spalten C1 bis CN, wobei der Schritt Folgendes umfasst:
b1) eine Verschiebung T1 der in den geradzahligen Spalten C2 bis CN enthaltenen beweglichen Träger (15) in Richtung der Reihe R; und
b2) eine Verschiebung T2 der in den ungeradzahligen Spalten C1 bis CN-1 enthaltenen beweglichen Träger (15) in der zur Richtung der Verschiebung T1 umgekehrten Richtung;
wobei die Schritte b1) und b2) gleichzeitig oder getrennt durchgeführt werden können, wobei die Reihenfolge, in der die Schritte b1) und b2) durchgeführt werden, unerheblich ist;
c) Durchführen eines Schritts der horizontalen Verschiebung einer Teilmenge der beweglichen Träger (15) entlang der Achse der Reihe R, wobei der Schritt Folgendes umfasst:
c1) eine Verschiebung T3 der in der Reihe R enthaltenen beweglichen Träger (15) in Richtung der horizontalen Achse, die nacheinander von den Spalten CN bis C1 passiert wird;
c2) eine Verschiebung T4 der beweglichen Träger (15), die sich an dem der Reihe R entgegengesetzten Ende jeder der Spalten C1 bis CN-1 befinden, in einer Richtung, die der Achse folgt, die nacheinander von den Spalten C1 bis CN passiert wird; und
c3) eine Verschiebung T5 der beweglichen Träger (15), die sich am anderen Ende jeder der Spalten C2 bis CN-2 befinden, in einer Richtung, die der Achse folgt, die nacheinander von den Spalten C1 bis CN passiert wird;
wobei die Schritte c1), c2) und c3) gleichzeitig oder getrennt durchgeführt werden können, wobei die Reihenfolge, in der die Schritte c1), c2) und c3) durchgeführt werden, unerheblich ist, wobei außerdem die Schritte b) und c) getrennt durchgeführt werden, wobei die Reihenfolge, in der die Schritte b) und c) durchgeführt werden, unerheblich ist;
d) Wiederholen der Schritte b) und c) solange, bis jeder der beweglichen Träger (15) am Ende des letzten Zyklus von Wiederholungen der Schritte b) und c) nacheinander alle möglichen Positionen auf der Oberfläche der Plattform (10) eingenommen hat, so dass ein vollständiger Zyklus der Verschiebung der beweglichen Träger (15) durchlaufen wurde;
e) Wiederholen des Schritts d) durch eine ausreichende Anzahl von Zyklen, um die Kultur der Vielzahl von Pflanzen durchzuführen.

14. Verfahren gemäß Anspruch 13, **dadurch gekennzeichnet, dass** es einen zusätzlichen Schritt der Zufuhr von Wasser und/oder Nährlösung, die für das Wachstum der Pflanzen notwendig sind, zu dem Kultursubstrat, das eine Pflanze, die sich in einem beweglichen Träger (15) befindet, trägt, durch wenigstens einen Zyklus von Wiederholungen der Schritte b) und c) hindurch umfasst, wobei der zusätzliche Schritt am Ende eines der Schritte b) oder c) durchgeführt wird.

15. Verfahren gemäß Anspruch 13 oder 14, **dadurch gekennzeichnet, dass** es in einer Pflanzenkulturkammer durchgeführt wird.

16. Verfahren gemäß einem der Ansprüche 13 bis 15, **dadurch gekennzeichnet, dass** wenigstens eine physikalische Bedingung der Umgebung im Innern der Kulturkammer, die aus Luftfeuchtigkeit, Temperatur und Helligkeit ausgewählt ist, kontrolliert wird.

17. Verfahren gemäß einem der Ansprüche 13 bis 16, **dadurch gekennzeichnet, dass** es einen zusätzlichen Schritt der Messung wenigstens eines phänotypischen Merkmals wenigstens einer Pflanze, die durch ein Kultursubstrat getragen wird, das sich in einem beweglichen Träger (15) befindet, durch wenigstens einen Zyklus von Wiederholungen der Schritte b) und c) hindurch umfasst, wobei der zusätzliche Schritt am Ende eines der Schritte b) oder c) durchgeführt wird.

18. Verfahren gemäß Anspruch 17, **dadurch gekennzeichnet, dass** der zusätzliche Schritt der Messung wenigstens eines phänotypischen Merkmals einer Pflanze aus einem Schritt der Messung der Blattfläche besteht.

19. Verfahren gemäß einem der Ansprüche 13 bis 18, **dadurch gekennzeichnet, dass** Schritt d) wenigstens 100-mal, vorzugsweise wenigstens 500-mal, wiederholt wird.

20. Verfahren gemäß einem der Ansprüche 13 bis 19, **dadurch gekennzeichnet, dass** die Häufigkeit von Schritt d) so groß ist, dass in 24 Stunden wenigstens 2 vollständige Zyklen der Verschiebung der beweglichen Träger (15) durchlaufen werden.

## Claims

1. An automaton useful to cultivate or phenotype a plurality of plants in a controlled environment **characterized in that** the automaton comprises a plate (10) on which is placed a plurality of movable holders (15) for culture substrate, said movable holders (15) being able to assume, consecutively, all possible positions on the surface of said plate (10), said automaton comprising:
(a) a plate (10) marked off, respectively, by four sides with raised edges; respectively, a lower-edged side (11), a left-edged side (12), an upper-edged side (13), and a right-edged side (14), and whose surface comprises:
- a row (20) marked off, respectively, by the raised edge (11) of the plate and a guide (21) parallel to said raised edge (11), with the ends of the guide (21) being far enough away from the edges (12) and (14) of the plate (10) to enable on each side a movable holder to pass through,
- a plurality of N adjacent columns (30) C1 through CN, perpendicular to the row (20) and marked off by the two raised edges (12, 14) of the two opposed sides of plate (10) perpendicular to the first side (11) and by a plurality of N-1 guides (31, 32) wherein the plurality of guides includes: a first group of (N/2) guides (31) wherein each guide (31) includes two ends (311, 312) with one end (311) in contact with the first guide (21), and the other end (312) being far enough away from the raised edge (13) of the plate (10) to enable a movable holder (15) to pass through, and a second group of (N/2)-1 guides (32) wherein each guide (32) is inserted between two successive guides of the first group (31), and includes two ends (321, 322) with one end (321) in contact with the raised edge side (13) of the plate (10) opposite to the row (20), the other end (322) being far enough away from the guide (21) parallel to the row (20) to enable a movable holder (15) to pass through, where N is an even number,
(b) a plurality of movable holders (15) installed on the surface of said plate (10):
(c) means for translating the plurality of movable holders (15) along an axis that is parallel to guides (31, 32) comprising, respectively:
- a first means (41) located, when at rest, at the end of the raised edge (11) that is in contact with the raised edge (12) of the plate (10), for translating the movable holders (15) in a direction running from the raised edge (11) towards the raised edge (13) of the plate, along column C1 marked off by the raised edge (12) and adjacent guide (31), a first series of means (42) for translating the movable holders (15) in a direction running from guide (21) parallel to the raised edge (11) towards raised edge (13) of the plate, along each of the odd-numbered columns C3 through CN-1, and a second series of means (43) for translating the movable holders (15) in a direction running from raised edge (13) towards raised edge (11) of the plate, along each of the even-numbered columns C2 through CN, and
(d) means for translating the movable holders (15) along an axis parallel to the row (20) comprising, respectively:
a first means (51) located, when at rest, at the end of the raised edge (11) of the plate (10) for translating the movable holders (15) in a direction running from the raised edge (14) towards the raised edge (12) of the plate, along the row (20) marked off by the raised edge (11) and the adjacent guide (21),
- a first series of means (52) for translating movable holders (15) located by raised edge (13) at the end of each odd-numbered column C1 through CN-1 to the end of each adjacent even-numbered column C2 to CN, and
- a second series of means (53) for translating movable holders (15) located by guide (21) parallel to raised edge (11) at the end of each even-numbered column C2 to CN2 to the end of each adjacent odd-numbered column C3 to CN-1.

2. The automaton of claim 1, **characterized in that** at least 100, better at least 500, movable holders are installed on the surface of the plate (10).

3. The automaton of claim 1 or 2, **characterized in that** a cultivation substrate holding plants is placed in at least a part of the movable holders (15).

4. The automaton according to anyone the preceding claims, **characterized in that** it is equipped with at least one means for weighing a movable holder (15).

5. The automaton according to anyone of the preceding claims, **characterized in that** it is equipped with at least one means for supplying necessary water or fertilizer solution to cultivation substrates holding plants placed in movable holders, for plant growth.

6. The automaton of claim 5, **characterized in that** said water or fertilizer solution supply means is located plumb with a means for weighing the movable holders (15).

7. The automaton according to anyone of the preceding claims, **characterized in that** it is equipped with at least one means for measuring a phenotypic characteristic of a plant.

8. The automaton of claim 4, **characterized in that** said measuring means consists in an image acquisition device.

9. A facility for cultivating or phenotyping a plurality of plants in a controlled environment, comprising: an automaton according to any one of claims 1 to 8, and at least one control and command means of the means for translating the movable holders (15).

10. The facility of claim 9, **characterized in that** said automaton is equipped with at least one means for weighing movable holders (15) and at least one means for delivering necessary water or fertilizer solution for plant growth located plumb with a means for weighing movable holders (15), and said facility further comprises control and command means connected to said weighing means and control and command means connected to said means for delivering necessary water or fertilizer solution for plant growth, enabling adjustment of the quantity of water, and/or fertilizer solution, necessary for plant growth delivered based on the measured weight of a movable holder (15).

11. The facility of claim 9 or 10, **characterized in that** the automaton is equipped with at least one means for measuring a phenotypic characteristic of a plant, and said facility comprises at least one control and command means for said measuring means and at least one means for storing data generated by said measuring means.

12. The facility according to anyone of claims 9 to 11, **characterized in that** said automaton is placed inside a plant cultivation enclosure, and said facility comprises at least one means for controlling and commanding at least one physical condition of the environment within which the automaton is placed, said condition selected from relative humidity, lighting, and temperature level.

13. A method for cultivating or phenotyping of a plurality of plants in a controlled environment, wherein each of the plants to be cultivated is held by a cultivation substrate placed inside one movable holder (15) on the surface of a plate (10) whose surface is divided, respectively, into:
- a row R located along a first edge (11) of the plate (10) that has two opposite ends,
- a plurality of N adjacent columns (30), designated C1 through CN, perpendicular to the row R, with each of the columns having two opposite ends,
wherein the first column C1 communicates, at its first end, via an opening large enough for the movable holders (15) to pass through, with the first end of the row R, and, at its other end, via an opening large enough for the movable holders (15) to pass through, with the following adjacent column C2,
wherein the Nth column CN communicating, at its first end, via an opening large enough for the movable holders (15) to pass through, with the opposite end of the row R, and, at its other end, via an opening large enough for the movable holders (15) to pass through, with the preceding adjacent column CN-1,
with each of the remaining columns C2 through CN-1 communicating, at one of its ends, via an opening large enough for the movable holders (15) to pass through, with a preceding adjacent column, and at its other end, via an opening large enough for the movable holders (15) to pass through, with a following adjacent column,
with each of the movable holders (15) being able to assume, consecutively, all of the possible positions on the surface of said plate (10), respectively:
- any position R1 through RA within said row R located along said first edge (11) of the plate (10) with A being equal to the maximum value of the number of movable holders (15) to be contained in said row R,
- any position CX1 through CXB within a column CX, where X is a whole number ranging from 1 to N, where N is an even number, and where B is equal to the maximum value of the number of movable holders (15) to be contained in a column CX,
said method comprising the steps of:
a) initializing a displacement cycle of the movable holders (15) by positioning said movable holders (15) on the surface of the plate (10) in such a way to enable any vertical translation and/or any horizontal translation during the subsequent step,
b) performing a step of vertical translation of a subset of the movable holders (15) along the axis of the columns C1 through CN, with said step including:
b1) a translation T1 of the movable holders (15) contained in the even-numbered columns C2 through CN towards the row R, and
b2) a translation T2 of the movable holders (15) contained in the odd-numbered columns C1 through CN-1 in the direction that is opposite the translation direction T1, wherein steps b1) and b2) can be performed simultaneously or separately in any order;
c) performing a step of horizontal translation of a subset of the movable holders (15) along the axis of the row R, with said step including:
c1) a translation T3 of the movable holders (15) contained in the row R in the direction of the horizontal axis passing consecutively through columns CN through C1,
c2) a translation T4 of the movable holders (15) located at the end of each column C1 through CN-1opposite the row R in a direction along the axis passing consecutively through columns C1 through CN, and
c3) a translation T5 of the of movable holders (15) located at the other end of the columns C2 through CN-2 in a direction along the axis passing consecutively through columns C1 through CN, wherein steps c1), c2) and c3) can be performed simultaneously or separately, in any order, and wherein steps b) and c) can be performed in any order,
d) repeating steps b) and c) a sufficient number of times for each of the movable holders (15) to have assumed, at the end of the last repetition cycle of steps b) and c) consecutively, all of the possible positions on the surface of said plate (10), such that a full displacement cycle of the movable holders (15) has been performed,
e) repeating step d) for a sufficient number of cycles to cultivate the plurality of plants.

14. The method of claim 13, **characterized in that** it comprises an additional step of delivering water and/or fertilizer solution to the cultivation substrate holding a plant placed inside one or more of the movable holders (15) during at least one repetition cycle of steps b) and c), with said additional step being performed at the end of either step b) or c).

15. The method of claim 13 or 14, **characterized in that** it is performed inside a plant cultivation enclosure.

16. The method according to anyone of claims 13 to 15, **characterized in that** at least one physical condition of the cultivation enclosure's internal environment, selected from relative humidity, temperature, and lighting levels, is controlled.

17. The method according to anyone of claims 13 to 16, **characterized in that** it comprises an additional step for measuring at least one phenotypic characteristic of at least one plant supported by the cultivation substrate placed inside the movable holders (15) during at least one repetition cycle of steps b) and c), with said additional step being performed at the end of either step b) or c).

18. The method of claim 17, **characterized in that** the additional step of measuring at least one phenotypic characteristic of a plant is a step for measuring leaf surface area.

19. The method according to anyone of claims 13 to 18, **characterized in that** step d) is repeated at least 100 times, better at least 500 times.

20. The method according to anyone of claims 13 to 19, **characterized in that** the frequency of step d) is such that at least 2 full cycles for displacing the movable holders (15) are performed every 24 hours.
